# EUROPEAN PATENT APPLICATION

(11) **EP 2 713 237 A2**
(43) Date of publication of application: **02.04.2014**
(21) Application number: 13194427.4
(22) Date of filing: 11.02.2011
(51) Int. Cl.: G06F 1/16, G06F 1/26

(54) **Mobile computing device charging and networking system and method**

(30) Priority: 11.02.2010 US 303357 P
(62) Divisional of application: 11742867.2
(71) Applicant: Ergotron, Inc., St. Paul, MN 55121 (US)
(72) Inventor: Hazzard, Joel, Osceola, WI 54020 (US); Fluhrer, Robert, Prior Lake, MN 55372 (US); Segar, Peter, Burnsville, MN 55337 (US); Ergun, Mustafa, Shoreview, MN 55126 (US); Lindblad, Shaun C., Lino Lakes, MN 55014 (US); Mensing, Jeffrey, R., Plymouth, MN 55442 (US); Theis, John, St. Paul, MN 55105 (US); Funk, Joe, Rosemount, MN 55068 (US); Cain, John, St. Cloud, MN 56303 (US)
(74) Representative: Howe, Steven

(57) **Abstract**

Systems and methods for charging and/or networking mobile computing devices. A cart for storing, charging, and/or networking mobile computing devices. A portable interface between a mobile computing device and a cart. A docking station module having a plurality of docking stations.

## Description

### RELATED APPLICATIONS

This application claims the benefit of US Provisional Application Serial No. 61/303,357, titled Laptop Computer Cart, filed February 11, 2010, the contents of which are hereby incorporated by reference.

### FIELD

The invention generally relates to systems and methods for charging and networking mobile computing devices, such as laptop computers.

### BACKGROUND

There are many situations in which multiple mobile computing devices, such as laptop/notebook computers, netbooks, tablets, and electronic readers, are simultaneously used. For example, multiple mobile computing devices are widely used in classrooms for educational purposes. In many cases, 10-40 mobile computing devices are simultaneously used in the classroom.

Typical mobile computing device carts are cabinets with shelves for laptops to rest on. Generally, each notebook must be connected to loose power and/or Ethernet cords, which is time consuming due to the large number of connections involved. Because making all these separate connections is time consuming and even difficult for younger users, some connections are frequently missed resulting in the laptop being unusable for at least part of a next user session.

### SUMMARY

In some embodiments, the invention includes a system and method for connecting mobile computing devices to power and/or a network. In certain embodiments, the invention includes carts with features that automatically connect mobile computing devices (e.g., laptops) to power and/or a network when the mobile computing devices are positioned in the cart. Such a cart allows a plurality of mobile computing devices to be connected to power and/or a network without the user ever having to touch a single cord. Further, some embodiments of the invention include carts that facilitate making these connections. In addition, the invention includes a portable interface that attaches to a mobile computing device to make a universal connection to a cart. Embodiments of the invention also include the interface itself, a docking station module having a plurality of docking stations, as well as methods of positioning mobile computing devices in a cart.

### BRIEF DESCRIPTION OF THE DRAWINGS

The following drawings are illustrative of particular embodiments of the present invention and therefore do not limit the scope of the invention. The drawings are not to scale (unless so stated) and are intended for use in conjunction with the explanations in the following detailed description. Embodiments of the present invention will hereinafter be described in conjunction with the appended drawings, wherein like numerals denote like elements.
Figure 1 includes a front perspective view of a cart in accordance with an embodiment of the invention.
Figure 2 includes a front perspective view of a cart in accordance with an embodiment of the invention.
Figure 3A includes a top plan view of a cart in accordance with an embodiment of the invention.
Figure 3B includes a front perspective view of a cart in accordance with an embodiment of the invention.
Figure 3C includes a front plan view of a cart in accordance with an embodiment of the invention.
Figure 3D includes a side plan view of a cart in accordance with an embodiment of the invention.
Figure 4A includes a top plan view of a cart in accordance with an embodiment of the invention.
Figure 4B includes a front perspective view of a cart in accordance with an embodiment of the invention.
Figure 4C includes a front plan view of a cart in accordance with an embodiment of the invention.
Figure 4D includes a side plan view of a cart in accordance with an embodiment of the invention.
Figure 5A includes a top plan view of a cart in accordance with an embodiment of the invention.
Figure 5B includes a front perspective view of a cart in accordance with an embodiment of the invention.
Figure 5C includes a front plan view of a cart in accordance with an embodiment of the invention.
Figure 5D includes a side plan view of a cart in accordance with an embodiment of the invention.
Figure 6 includes a front perspective view of a cart in accordance with an embodiment of the invention.
Figure 7 includes a front perspective view of a cart in accordance with an embodiment of the invention.
Figure 8 includes a front perspective view of a cart in accordance with an embodiment of the invention.
Figure 9 includes a front perspective view of a cart in accordance with an embodiment of the invention.
Figure 10 includes a front perspective view of a cart in accordance with an embodiment of the invention.
Figure 11 includes a front perspective view of the cart of Figure 10 with its doors opened.
Figure 12 includes a rear perspective view of the cart of Figure 10 with its rear panel removed.
Figure 13 includes a front perspective view of a cart in accordance with another embodiment of the invention.
Figure 14 includes a front perspective view of the cart of Figure 13 with its doors opened.
Figure 15 includes a rear perspective view of the cart of Figure 13 with its rear panel removed.
Figure 16 includes a perspective view of a docking station in accordance with an embodiment of the invention.
Figure 17A includes a front perspective view of a mobile computing device and a docking station in accordance with an embodiment of the invention.
Figure 17B includes a front perspective view of a mobile computing device and a docking station in accordance with an embodiment of the invention.
Figure 18 includes a front perspective view of a docking station module in accordance with an embodiment of the invention.
Figure 19 includes a front perspective view of a docking station in accordance with an embodiment of the invention.
Figure 20 includes a front perspective view of a docking station module and a connector in accordance with an embodiment of the invention.
Figure 21 includes a front perspective view of a network connector in accordance with an embodiment of the invention.
Figure 22 includes a front perspective view of a network connector in accordance with an embodiment of the invention.
Figure 23 includes a front perspective view of a network connector in accordance with an embodiment of the invention.
Figure 24 includes a front perspective view of a power connector in accordance with an embodiment of the invention.
Figure 25 includes a front perspective view of a power connector in accordance with an embodiment of the invention.
Figure 26A includes top plan view of a mobile computing device and a portable interface in accordance with an embodiment of the invention.
Figure 26B includes top plan view of a mobile computing device and a portable interface in accordance with an embodiment of the invention.
Figure 26C includes top plan view of a mobile computing device and a portable interface in accordance with an embodiment of the invention.
Figure 26D includes top plan view of a mobile computing device and a portable interface in accordance with an embodiment of the invention.
Figure 27A includes bottom plan view of a mobile computing device in accordance with an embodiment of the invention.
Figure 27B includes side plan view of a portable interface in accordance with an embodiment of the invention.
Figure 27C includes side plan view of a portable interface in accordance with an embodiment of the invention.
Figure 27D includes top plan view of a portable interface in accordance with an embodiment of the invention.
Figure 28A includes a front perspective view of a cart with its doors closed in accordance with an embodiment of the invention.
Figure 28B includes the embodiment of Figure 28A with a door that has been pivoted to an open position.
Figure 28C includes the embodiment of Figure 28A with the door translated rearward to a stowed position.
Figure 28D includes the embodiment of Figure 28A with a second door pivoted to an open position.
Figure 28E includes the embodiment of Figure 28A with the second door translated rearward to a stowed position.
Figure 29A includes an embodiment of a door in a closed position in accordance with an embodiment of the invention.
Figure 29B includes the embodiment of Figure 29A with the door in an open position. Figure 29C includes the embodiment of Figure 29A with the door in a stowed position. Figure 30A includes a rear perspective of a cart with a rear panel removed in accordance with an embodiment of the invention.
Figure 30B includes a portion of a rear panel in accordance with an embodiment of the invention.
Figure 31A includes an AC/DC converter retention system in accordance with an embodiment of the invention.
Figure 31B includes an AC/DC converter retention system in accordance with an embodiment of the invention.
Figure 31C includes an AC/DC converter retention system in accordance with an embodiment of the invention.
Figure 32 includes a front perspective view of a cart with a top access door in a partially open position in accordance with an embodiment of the invention.
Figure 33 includes a rear perspective view of the cart of Figure 32 in a partially open position.
Figure 34 includes a rear perspective view of the cart of Figure 32 with the door removed.
Figure 35 includes a front perspective view of an auxiliary power outlet having a cover in accordance with an embodiment of the invention.
Figure 36A includes a front perspective view of an auxiliary power outlet having a cover in the open position in accordance with an embodiment of the invention.
Figure 36B includes a front perspective view of an auxiliary power outlet having a cover in the open position in accordance with an embodiment of the invention.
Figure 37A includes a front perspective view of a peg and riser system in accordance with an embodiment of the invention.
Figure 37B includes a front perspective view of a peg and riser system in accordance with an embodiment of the invention.
Figure 38A includes a front perspective view of a cord retainer in an open position in accordance with an embodiment of the invention.
Figure 38B includes the embodiment of Figure 38A in a closed position.
Figure 39A includes the embodiment of Figure 38A with a network connecting cord.
Figure 39B includes the embodiment of Figure 38A with a power cord.
Figure 40 includes a rear perspective view of an elongated cable retention device in accordance with an embodiment of the invention.
Figure 41 includes the embodiment Figure 40 secured to a shelf.
Figure 42 includes the embodiment Figure 40 secured to a shelf.

### DETAILED DESCRIPTION OF THE PREFERRED EMBODIMENTS

The following detailed description is exemplary in nature and is not intended to limit the scope, applicability, or configuration of the invention in any way. Rather, the following description provides some practical illustrations for implementing exemplary embodiments of the present invention. Examples of constructions, materials, dimensions, and manufacturing processes are provided for selected elements, and all other elements employ that which is known to those of ordinary skill in the field of the invention. Those skilled in the art will recognize that many of the noted examples have a variety of suitable alternatives.

Embodiments of the invention include a system and method for charging and/or networking a mobile computing device. Such systems and methods are useful for charging and networking a plurality of mobile computing devices. In general, a mobile computing device includes laptop/notebook computers (i.e., a portable computer having a screen pivotally connected to a keyboard), netbooks, tablets, and electronic readers. Typical mobile computing devices include a battery that needs to be periodically recharged and software that needs to be periodically updated or maintained.

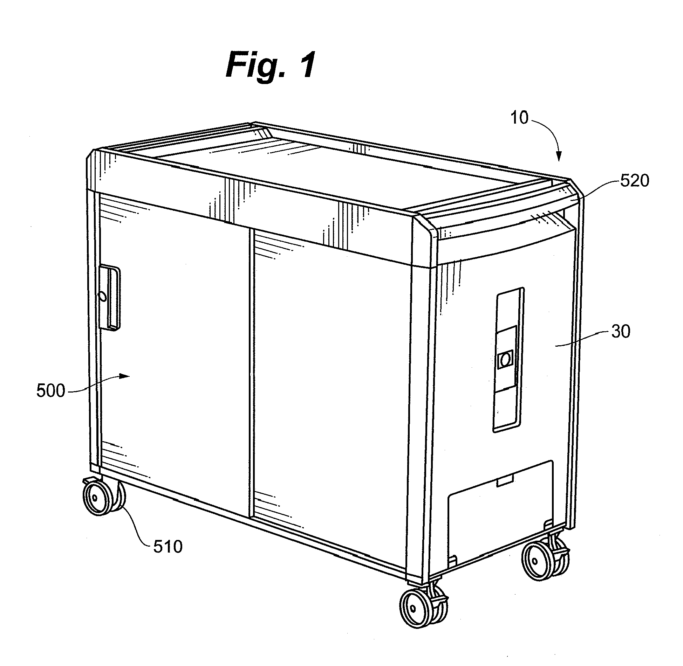

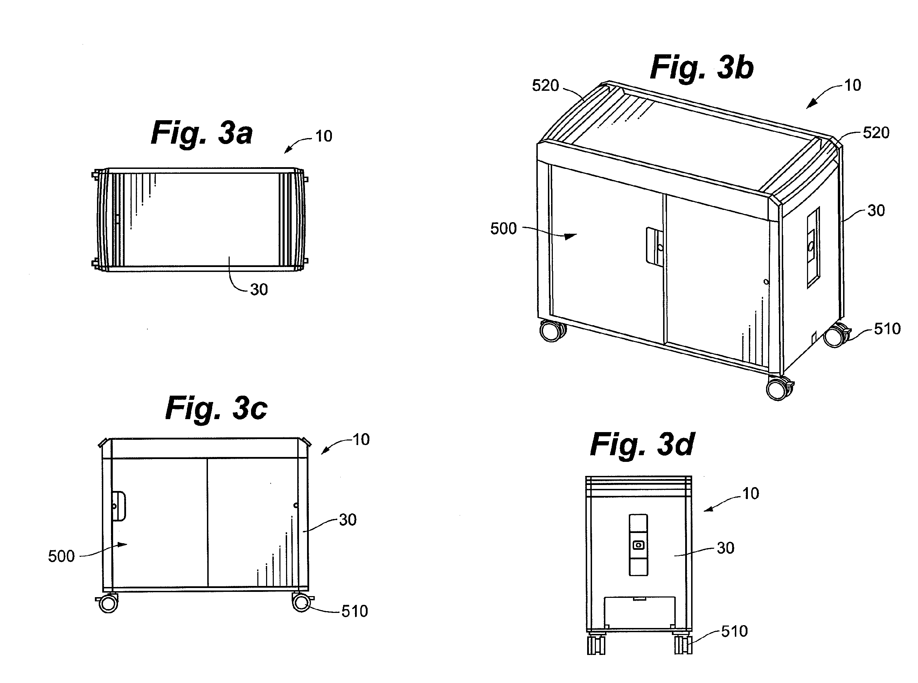

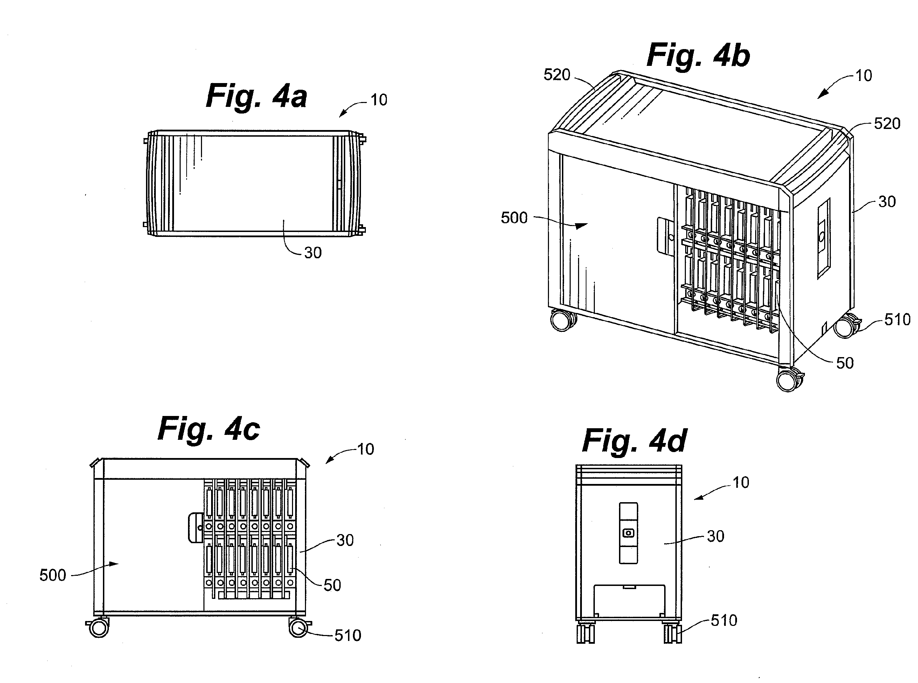

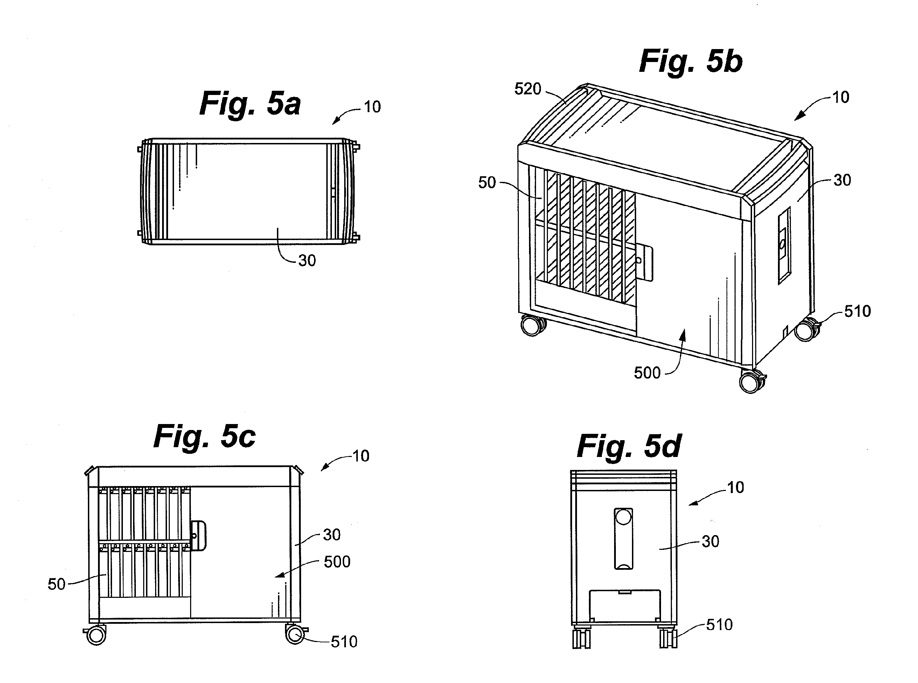

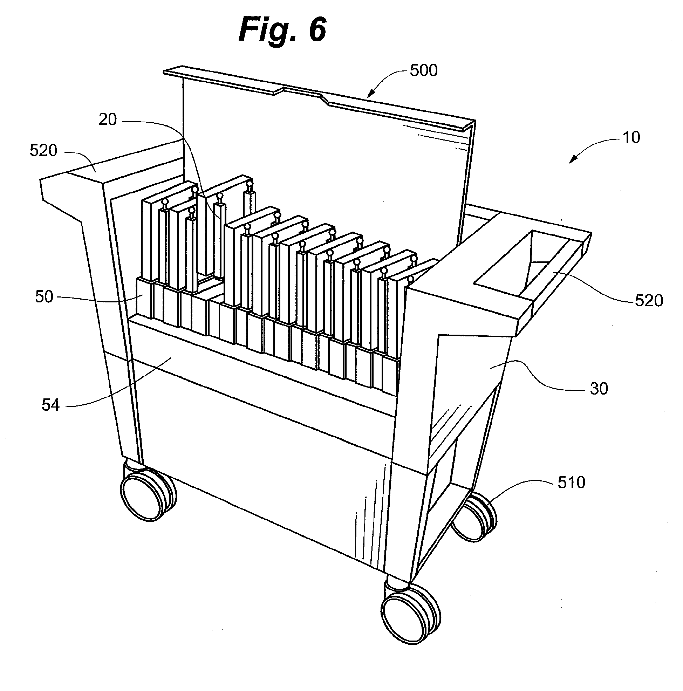

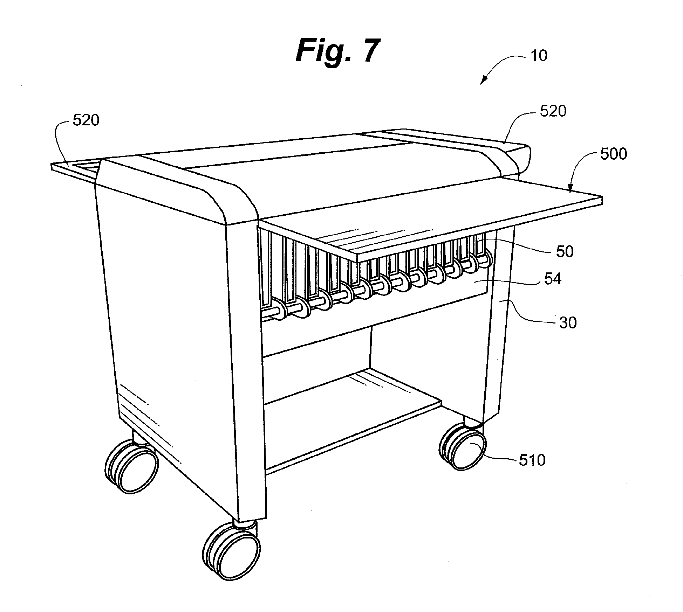

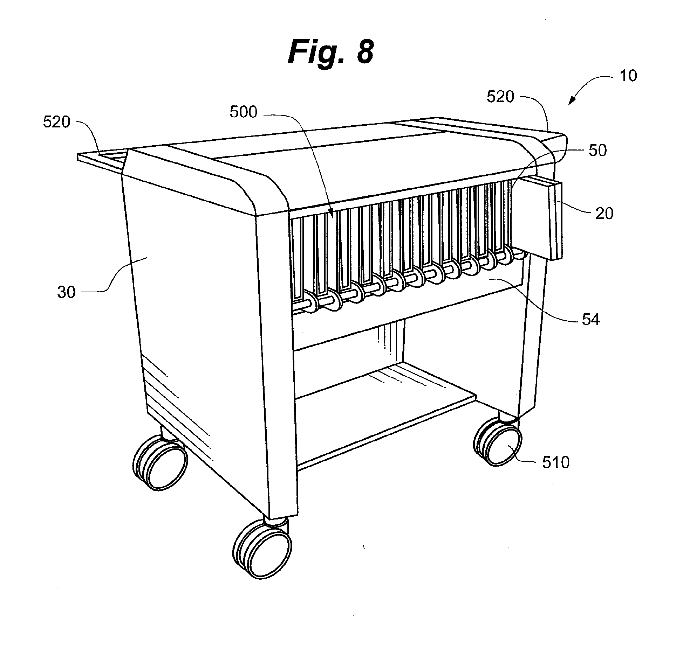

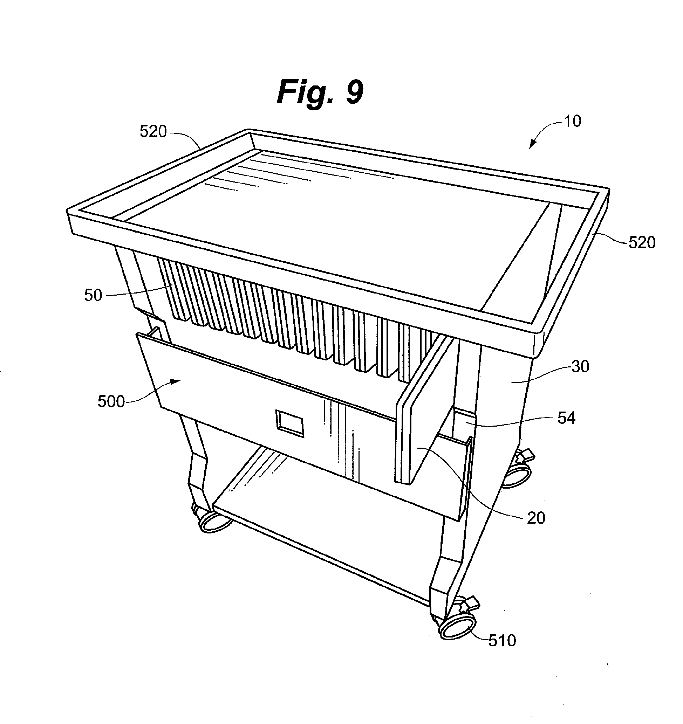

As shown in Figures 1-9, in some embodiments the invention includes a mobile computing device cart 10 adapted to hold a plurality of mobile computing devices 20 in a corresponding plurality of docking stations 50, as will be further described below. As shown, the docking stations can be arranged in a vertical orientation on a shelf 54 such that the mobile computing devices are stored in a vertical orientation when docked in the docking station. As shown, the cart can include a cabinet 30 defining an interior space for storing a plurality of mobile computing devices. The cart can be configured to hold as many mobile computing devices as desired. In some embodiments, the cart holds at least 10 mobile computing devices in its interior space. In other embodiments, the cart is configured to hold between 10 and 40 (e.g., between 20 and 30) mobile computing devices in its interior space and includes a corresponding number of docking stations 50.

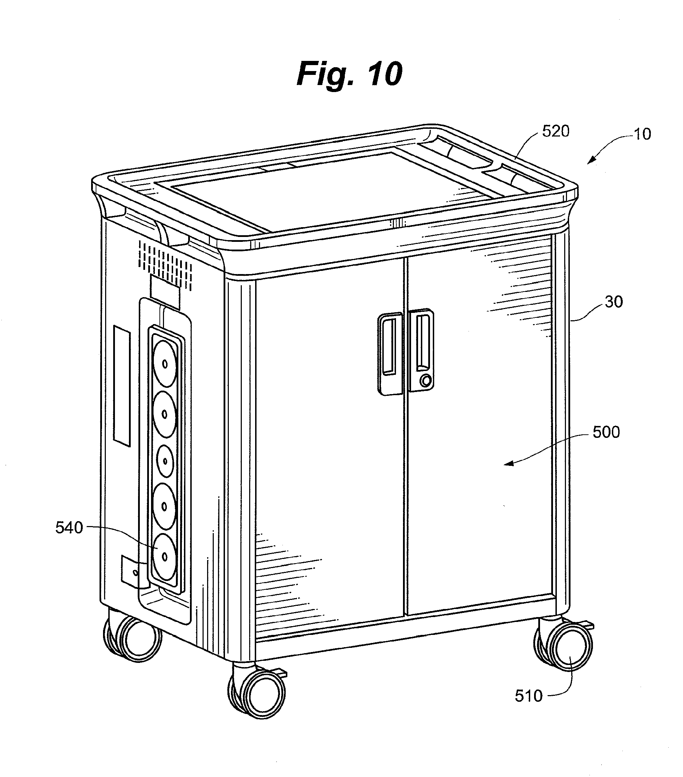

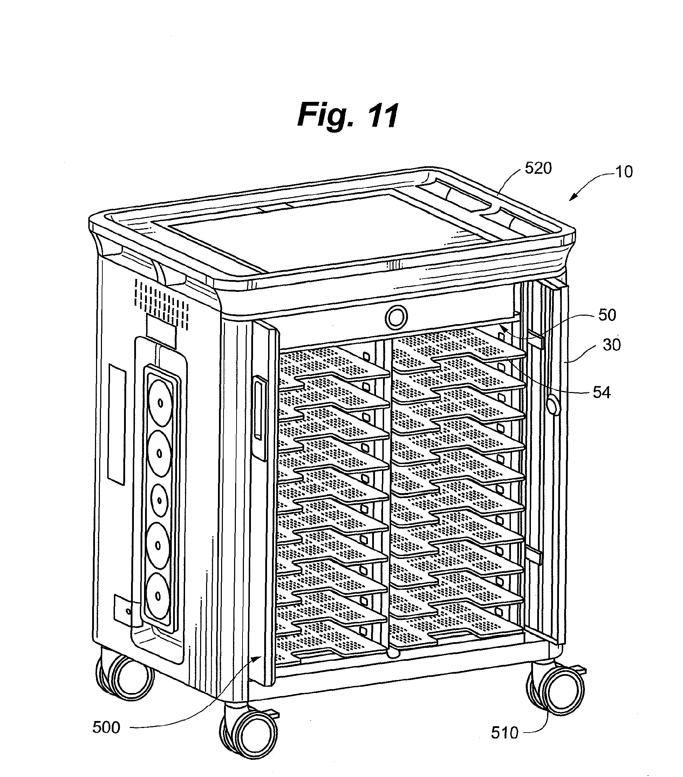

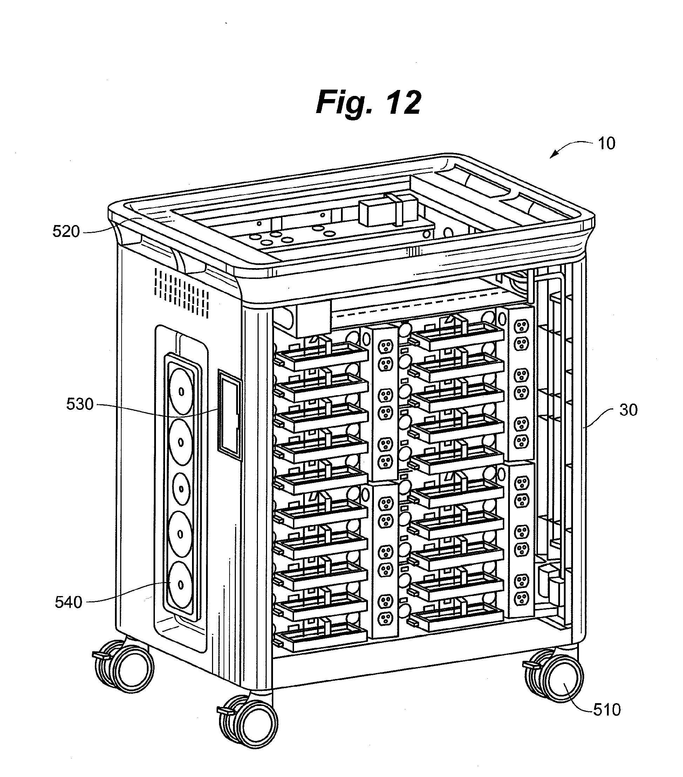

Figures 10-12 show an embodiment of a cart 10 adapted to hold 20 mobile computing devices. Figure 10 shows a front perspective view of such a cart with its doors closed. Figure 11 shows a front perspective view of such a cart with its doors open to expose a plurality of docking stations arranged in a 2X10 array. As show, the cart can include a series of docking stations 50 arranged in a horizontal orientation on a shelf 54 such that the mobile computing devices are stored in a horizontal orientation when docked in the docking station. Figure 12 shows a rear perspective view of the cart with its rear panel removed. As shown in Figure 12, the cart includes an array of AC/DC converter holders corresponding to each docking station in the cart.

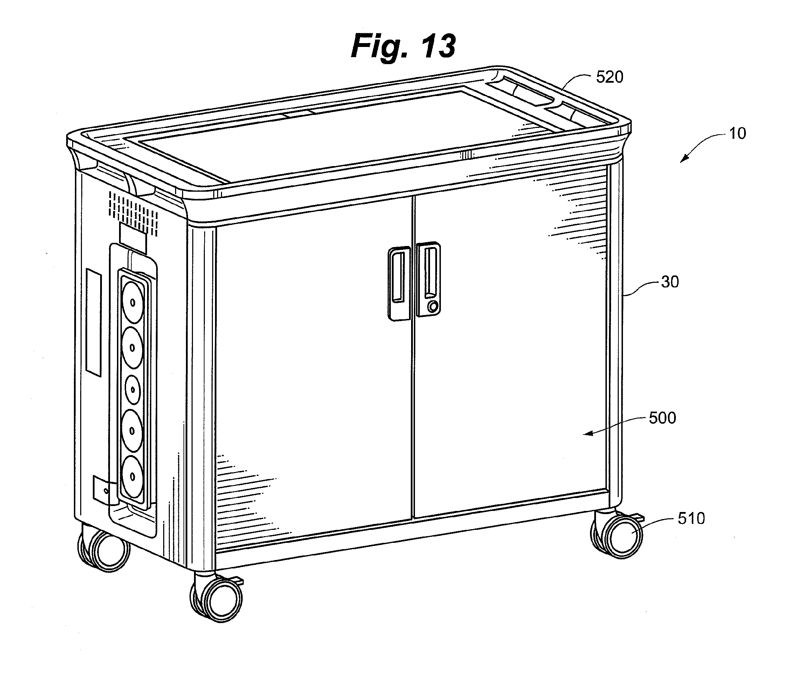

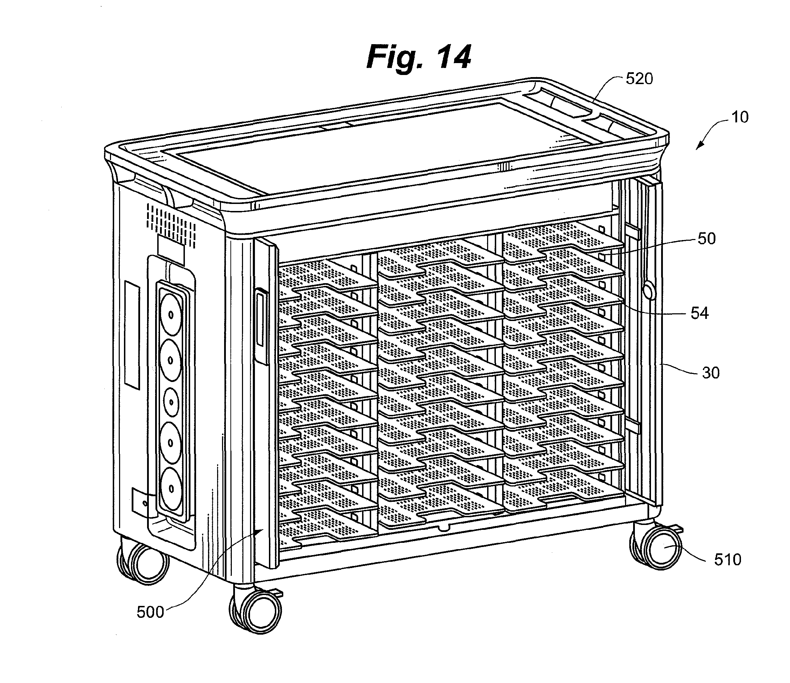

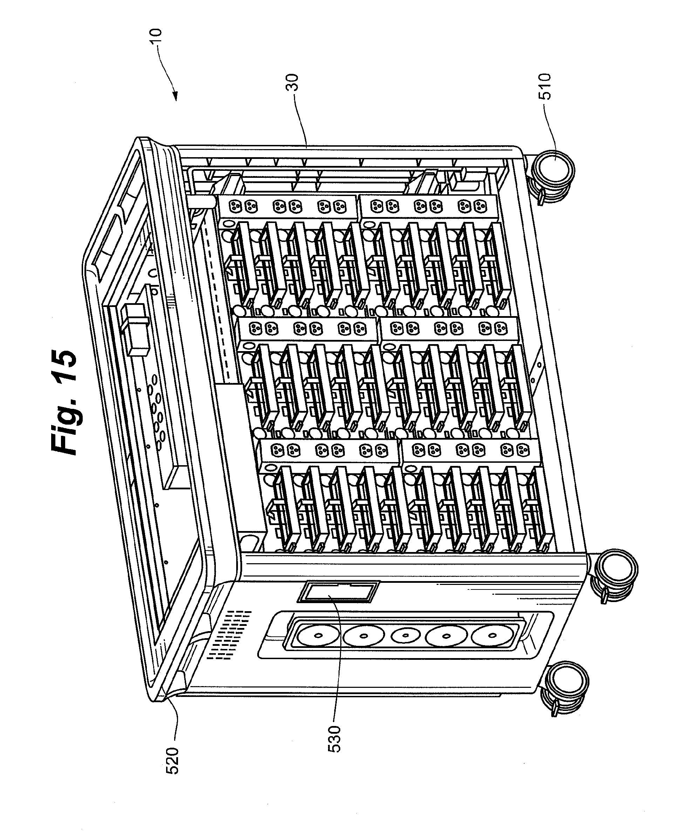

Figures 13-15 show another embodiment of a cart 10 adapted to hold 30 mobile computing devices. Figure 13 shows a front perspective view of such a cart with its doors closed. Figure 14 shows a front perspective view of such a cart with its doors open to expose a plurality of docking stations arranged in a 3X10 array. Figure 15 shows a rear perspective view of the cart with its rear panel removed to expose an array of AC/DC converter holders corresponding to each docking station in the cart.

A power supply system can be provided for charging the plurality of mobile computing devices when stored within the interior space. The power supply system is useful for recharging the batteries of the mobile computing devices stored in the cart. The power supply system includes a device to receive power into the cart, such as a male power cord extending from the cart or a female receptacle in or on the cart. Embodiments of the power supply system convert AC power to DC power and ultimately route the power to each mobile computing device stored within the cart. In some embodiments, the power system includes a timer that charges a subset of the total number of mobile computing devices at any one time, and cycles the subsets until all mobile computing devices are substantially fully charged. Such a timer is useful for limiting the instantaneous power draw of the system.

Further, a network connection system can be provided for connecting the plurality of mobile computing devices to a network such as the Internet and/or a Local Area Network when stored within the interior space. The network connection system includes at least one device for the cart to communicate with the network. In some embodiments, this device includes a wire extending from the cart. In other embodiments, the cart includes a wireless transmitter that allows the cart to communicate with the network. Ultimately, the cart allows for communication between each mobile computing device stored in the cart and the network. Such a connection is useful for providing software updates to the mobile computing devices when they are not in use. In general, these systems are internal to the cart and are not easily accessible to users. Of course, the cart can provide each mobile computing device with other connections.

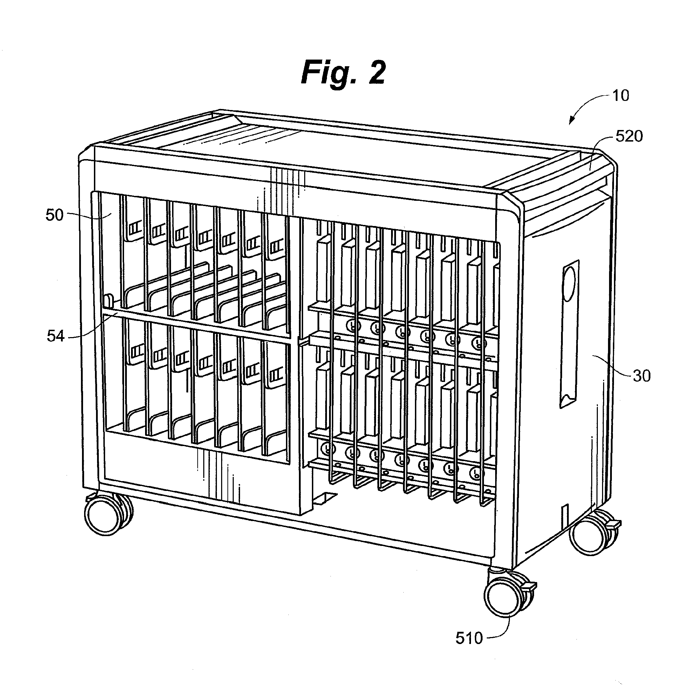

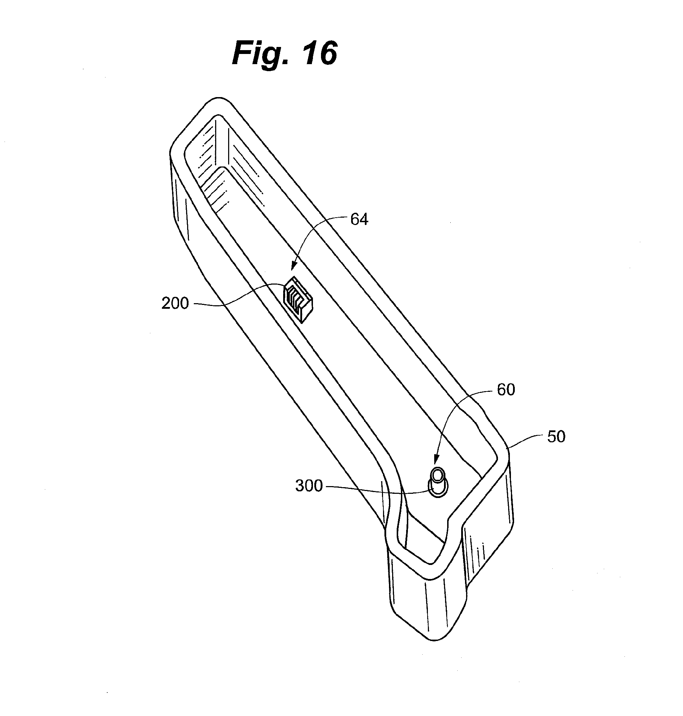

In some embodiments of the invention, as shown in Figures 2 and 4A-9, 11, and 14 a mobile computing device docking station 50 for each mobile computing device is disposed in the interior space. Embodiments of mobile computing device docking stations are shown in Figures 16-18. Each docking station connects an associated mobile computing device with the cart's power connection system and/or network connection system when the mobile computing devices are stored within the interior space. In some embodiments, the docking station has a power connection 60 and/or network connection 64 that connect to the mobile computing device automatically as the mobile computing device is positioned (e.g. pushed in or let down from a vertical position) in the docking station. Such a system saves significant time because of the number of connections required to connect a plurality of mobile computing devices. Further, such a system is user friendly because, in many embodiments, the connections are made toward the rear of the mobile computing device as it is inserted into the cart, which may be hard to access or see by the user.

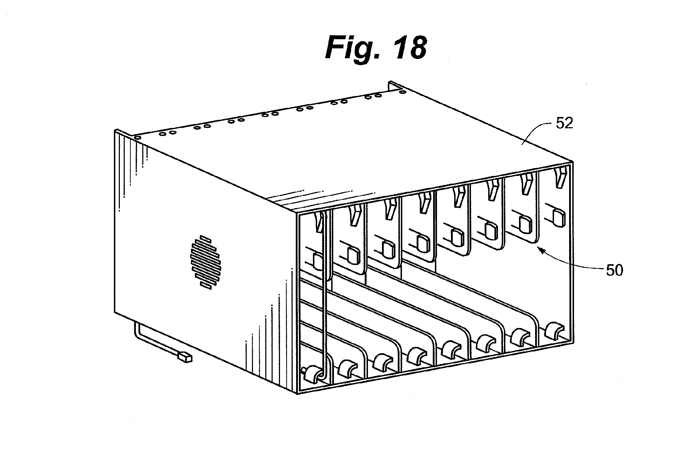

In some embodiments, such as shown in Figure 18, the docking stations 50 are modular. For example, a module 52 containing a plurality of (e.g., 3-5 (e.g. 4)) individual docking stations arranged in a horizontal or vertical series and sharing common power and/or network connections to the cart can be provided. Such a module is useful for easy interchangeability in the cart. For example, if a user has new mobile computing devices that are desired to be stored in the cart, new docking station modules that fit the new mobile computing devices can be easily installed in the cart. Some embodiments of the invention include a mobile computing device docking station module 52. In such an embodiment, the docking station module providing a plurality of docking stations for connecting a plurality of mobile computing devices to a power supply system when the plurality of mobile computing devices are docked in the docking module. Further each docking station may have having a power connection that connects to the corresponding mobile computing device automatically as the mobile computing device is positioned in the docking station.

The docking station 50 can include any shape useful for automatically connecting the mobile computing device to the power and/or network systems as the mobile computing device is engaged in the docking station. In some embodiments, the docking station has a shape adapted to conform to the mobile computing device to hold the mobile computing device in a desired position. In embodiments where the cart includes at least one horizontal shelf 54 within the interior space, the docking station can be disposed on the shelf. As shown in Figures 1-9, the plurality of docking stations 50 can be configured to hold the plurality of mobile computing devices in a generally vertical position, or as shown in Figures 10-15, the plurality of docking stations 50 can be configured to hold the plurality of mobile computing devices in a generally vertical position. Further, each docking station can provide the power and/or network connections 60, 64 to a leading peripheral edge of a mobile computing device as it is inserted into docking station, such that the connections are not fully made until the mobile computing device is securely docked. In some embodiments, each docking station is specially adapted to fit a particular mobile computing device's geometry. In other embodiments, the docking station is customizable to fit a variety of mobile computing device geometries.

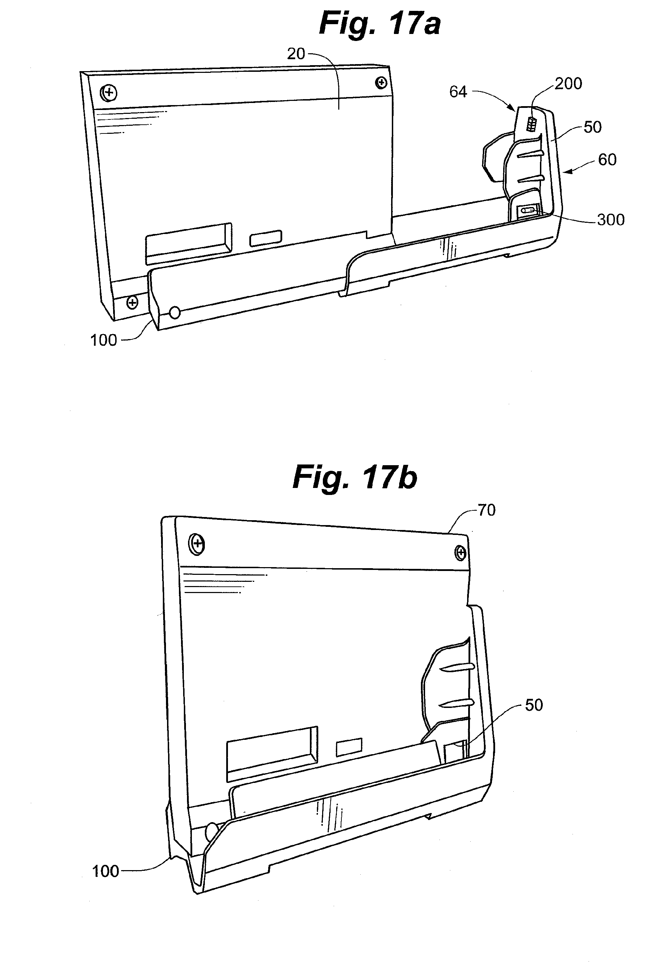

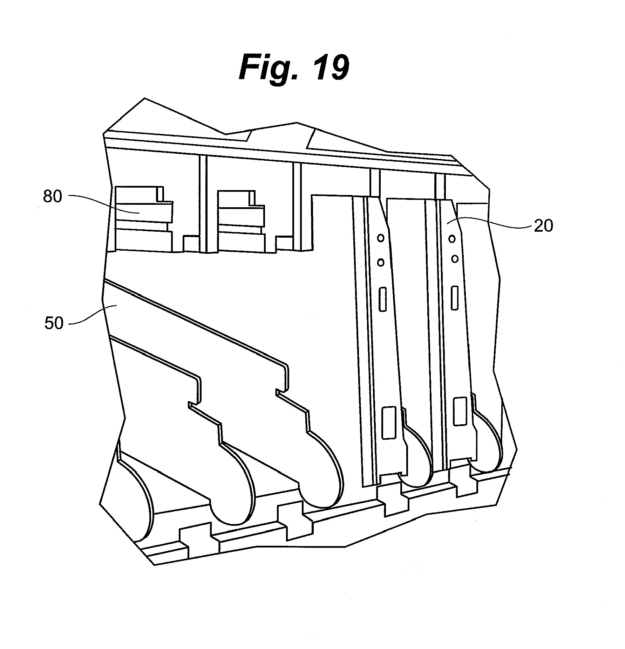

In some embodiments, as shown in Figure 19, the docking station includes a key 80 such that the mobile computing device 20 can only be positioned in the docking station in one direction. In one embodiment, the key includes a patterned slot corresponding to a profile of the mobile computing device. As shown in Figure 17, an optional lock 100 may also be provided. The lock can function to only close if the mobile computing device 20 is fully and securely positioned in the docking station 50. Further, a status indicator light may be provided to alert the user when the mobile computing device is fully docked and/or if the mobile computing device is only partially docked and needs to be repositioned.

Embodiments of the invention include a docking station 50 that includes power and/or network connections 60, 64 that have been specifically adapted to facilitate easy engagement with the mobile computing device, which is especially useful when the connection is made outside of the view of the user. The power and network connections may either or both be so specifically adapted. Of course, any other desired connections between the mobile computing device and the cart may also incorporate some or all of these features.

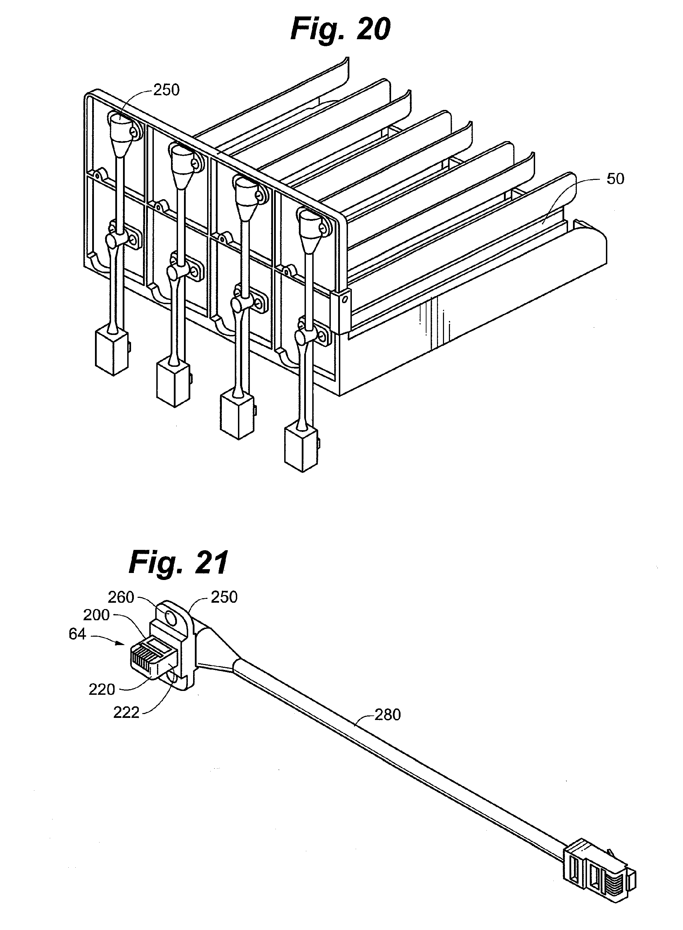

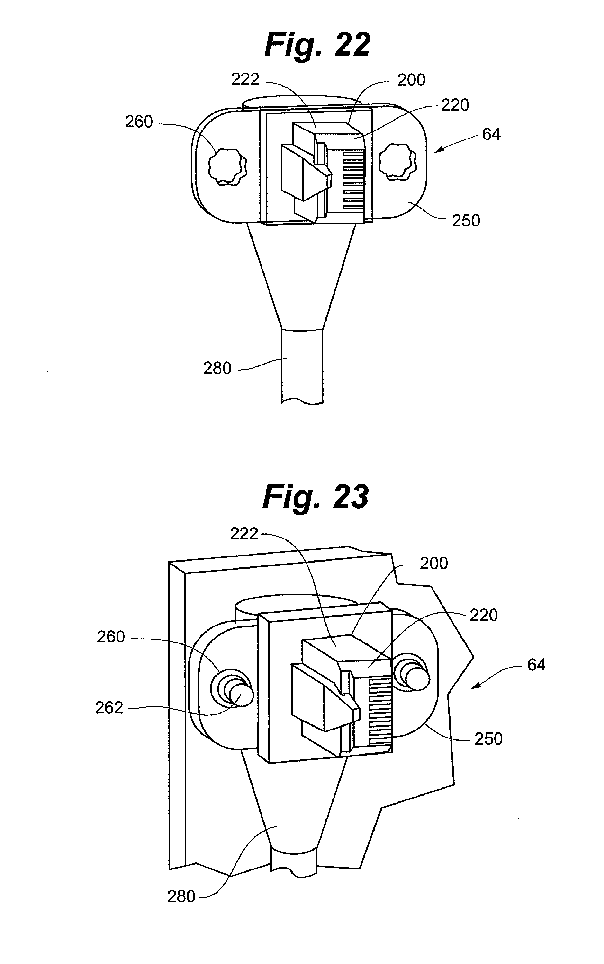

As shown best in Figures 20-23, some embodiments of the invention include a network connection 64 with a male connector 200 disposed within (e.g., extending from) each docking station 50 to mate with a mobile computing device. In certain embodiments, the male connector is a customized RJ45 jack. As shown, the male connector can be provided with a beveled leading edge 220 to help guide the male connector into a receiving connector in the mobile computing device. In some embodiments, the beveled leading edge has an angle of between about 30 degrees to about 60 degrees (e.g., about 45 degrees) with respect to the connector body 222. Independently, the male connector can be provided without a locking tab. In such embodiments, the male connector can be completely connected and disconnected to the receiving connector in the mobile computing device by applying a force only to the mobile computing device. In some embodiments, the male connector is mounted to the docking station 50 via a flange 250 having at least one aperture 260 for receiving a connector. In such embodiments, the aperture can be sized or shaped to allow for relative movement between the flange and the connector, which is rigidly attached to the cart, to facilitate alignment between the male connector and the mobile computing device receiving connector. In the embodiment of Figures 22 and 23, the aperture 260 has a star shape and the connector 262 includes a screw. In some embodiments, the male connector 200 is coated with a relatively thick conductive material (e.g., 50 microinch gold) to protect against wear from repeated insertions. In some embodiments, the male connecter 200 is connected at a right angle to a cable 280. In some embodiments, as shown in Figure 21, the other end of the cable 280 includes a standard RJ45 jack that plugs into the cart and is ultimately connected with a wire or wireless transmitter that allows communication between the cart and the network.

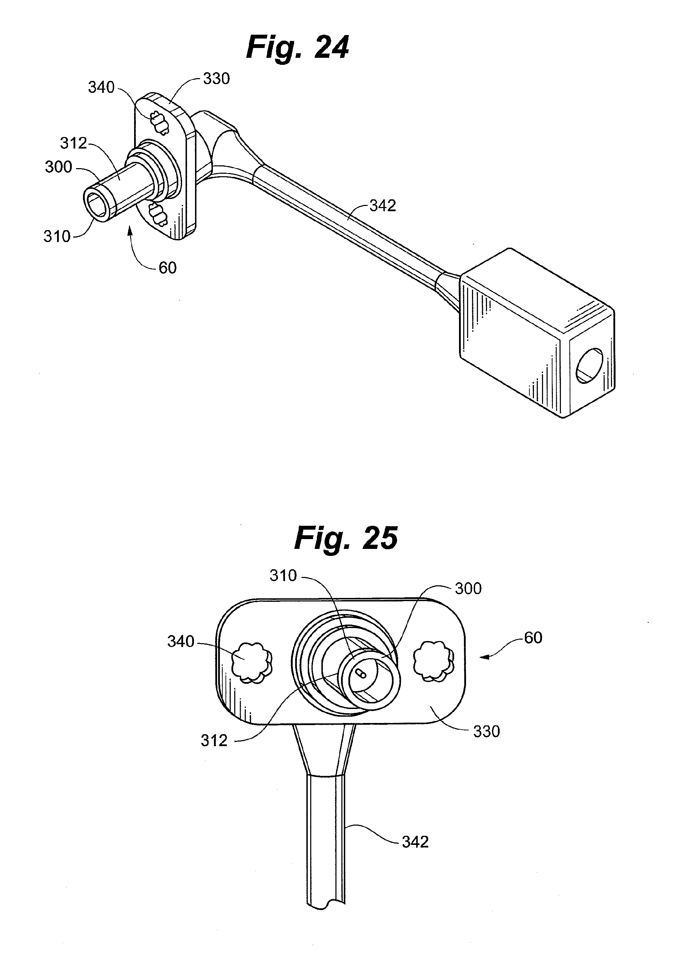

In some embodiments, the power connection 60 includes a male power connector 300 disposed within (e.g., extending from) each docking station 50 to mate with a mobile computing device. In the embodiment of Figures 24-25, the male power connector 300 has a beveled leading edge 310 to help guide the male power connector into a receiving power connector in the mobile computing device. In certain embodiments, the beveled leading edge is circumferential has an angle of between about 30 degrees to about 60 degrees (e.g., about 45 degrees) with respect to the power connector body 312. In some embodiments, the male power connector is mounted to the docking station via a flange 330 having at least one aperture 340 for receiving a connector (not shown), which is rigidly attached to the cart, to allow for relative movement between the flange and the connector to facilitate alignment between the male power connector and the mobile computing device power receiving connector. In one embodiment, the aperture 340 has a star shape and the connector includes a screw. As shown, the male power connecter 300 can be connected at a right angle to a cable 342. In some embodiments, the other end of the cable includes a plug that ultimately connects to the power device that supplies external power to the cart. Of course, the modifications discussed herein can be applied to a wide variety of electrical connections, such as DC power, AC power, serial, USB, etc.

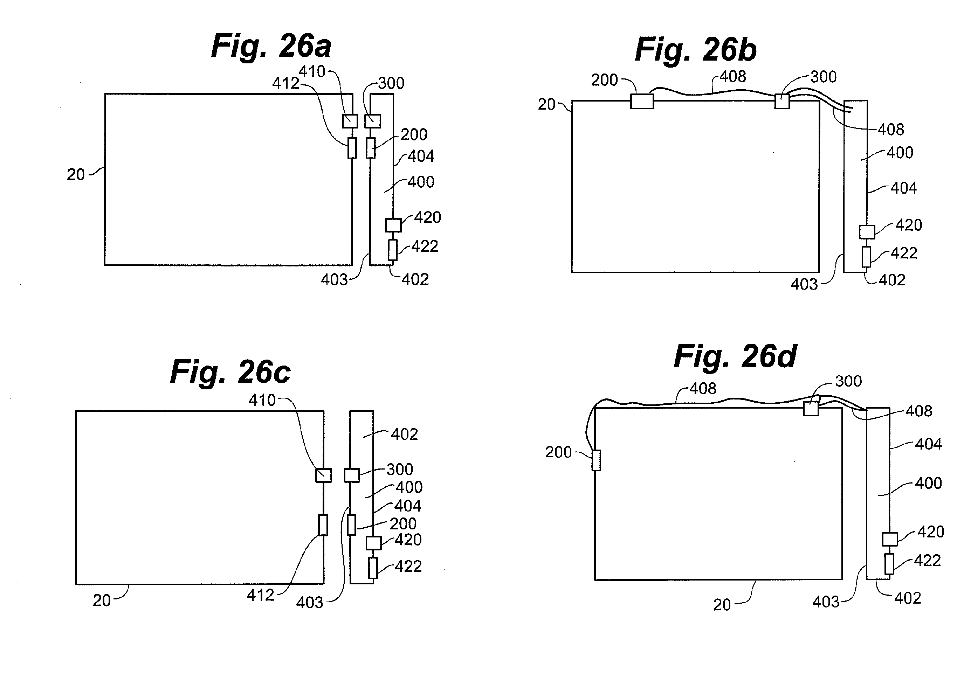

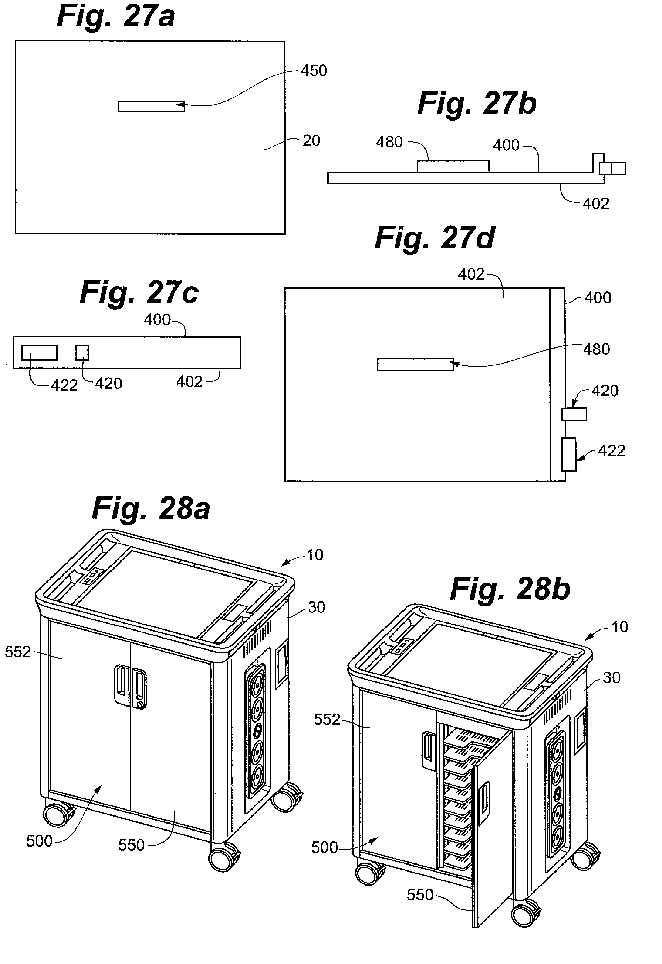

In other embodiments, as shown in Figures 26A-27D, a portable interface 400 is provided between the mobile computing device and the cart. In certain embodiments, the interface 400 is attached to the mobile computing device 20 such that it is removed from the cart with the mobile computing device. The location of the cart side connections, which are positioned to mate with the interface, can be considered a "docking station." Embodiments of the invention include carts having a plurality of such docking stations, each of which may include any of the features of any other docking station embodiment described herein.

The interface can be unique to, or configured for, connecting to a particular mobile computing device. However, the cart side connections are universally positioned to connect to a cart. Accordingly, this approach allows the cart to be used through successive generations of mobile computing devices because only a new or recustomized interface must be provided with each new mobile computing device configuration to connect to the cart.

In some embodiments the portable interface 400 has a body 402 with a first surface 403 in apposition to the mobile computing device 20 and a second surface 404 in apposition to the cart. The body can comprise any suitable material, such as sheet metal or plastic, and can include any suitable shape, such as U-shaped, L-shaped, pocket type, etc. As shown in Figures 26A-D, the first surface 403 can have at least a power connection (e.g., a male power connector 300) and/or network connection (e.g., a male network connector 200) that is respectively aligned with the mobile computing device's power receiving connector 410 and the mobile computing device's network receiving connector 412. In addition, the second surface 404 can have a mobile computing device cart power connector 420 and/or a mobile computing device cart network connector 422 for creating power and network connections to the mobile computing device cart automatically as the mobile computing device and interface are positioned in the interior space. In such embodiments, the mobile computing device cart power connector and mobile computing device cart network connector are respectively aligned with the cart side power and network connectors when the interface is positioned in the cart. Such embodiments provide an interface between a range of mobile computing device styles and a common cart interface. The interface can be attached to the mobile computing device by any suitable method, such as screws, straps, hook and loop, press fit connections, etc.

In some embodiments, the mobile computing device side connections of the interface 400 are adjustable to accommodate a variety of mobile computing devices 20. In one example, the mobile computing device power receiving connector 410 and mobile computing device network receiving connector 412 are positionable on the first surface 403 to accommodate a variety of mobile computing device configurations. In another example, as shown in Figure 26B and D, the interface 400 includes flexible connectors 408 (e.g., wires) that allow the male power connector 300 and the male network connector 200 to be routed to the mobile computing device power receiving connector 410 and mobile computing device network receiving connector 412 regardless of their orientation on the mobile computing device 20.

As shown in the embodiment of Figures 27A-D, the interface 400 may also extend and use the common docking port found on the underside of many mobile computing devices 20. Figure 27A shows a mobile computing device 20 (e.g., laptop) with a port 450. Figures 27B and D show the interface 400 with port interface 480 adapted to mate with mobile computing device port 450. In such embodiments, the interface extends to the underside of the mobile computing device and the male power connector and the male network connector are included in the port interface 480 for connecting to the port 450 on the underside of the mobile computing device 20.

In some embodiments, the network connection on the cart side includes a male connector disposed within the cart. These cart side connectors may be adapted as described above for the docking station connectors to facilitate the secure placement of the mobile computing device and interface. For example, the cart side male connector can have a beveled leading edge to help guide the male connector into a receiving connector in the interface. Further, in some embodiments the cart side male connector does not include a locking tab, such that the male connector can be completely connected and disconnected to the receiving connector in the interface by applying a force only to the mobile computing device.

In some embodiments, the cart male connector is mounted to the cart via a flange having at least one aperture for receiving a connector. The aperture can allow for relative movement between the flange and the connector to facilitate alignment between the cart male connector and the interface receiving connector, and in some embodiments the aperture has a star shape and the connector includes a screw. In some embodiments, the male connecter is connected at a right angle to a cable.

In certain embodiments, the power connection includes a cart male power connector disposed within the cart, and the male power connector has a beveled leading edge to help guide the male power connector into a receiving power connector in the interface. Further, in some embodiments the male power connector is mounted to the cart via a flange having at least one aperture for receiving a connector, wherein the aperture allows for relative movement between the flange and the connector to facilitate alignment between the male power connector and the interface power receiving connector, such as a star shape. In some embodiments the male power connecter is connected at a right angle to a cable.

The cart 10 itself can include any structure useful for holding a plurality of mobile computing devices and providing power and/or network connectivity. As shown, for example in Figures 1 and 2, in some embodiments the cabinet includes a door assembly 500 having one or more doors to close the interior space bounded by a top, bottom, and four sides. Such doors can be of any style including, sliding, openable from the top, or swingable outwardly. In some embodiments, the door may optionally be locked to secure the mobile computing devices within the cart. In some embodiments, wheels 510 can be positioned on an underside of the cabinet to facilitate easy movement of the cart. Further, handles 520 can be provided to facilitate the movement of the cart. Further, as shown in Figures 12 and 15, one or more auxiliary power outlets 530 can be provided on the exterior of the cart 10. Such power outlets allow for accessories such as printers and projectors to be plugged into the cart so that additional power cords do not have to be run from the cart to the wall.

In some embodiments, the cart 10 includes an air circulation system to cool the plurality of mobile computing devices when they are in the interior space. As shown in Figures 10 and 12, the air circulation system can include at least one fan 540 disposed in an outer surface of the cabinet to facilitate air exchange between the interior and the exterior of the cabinet. In some embodiments, one or more passive vents are provided in the exterior of the cabinet to facilitate air circulation.

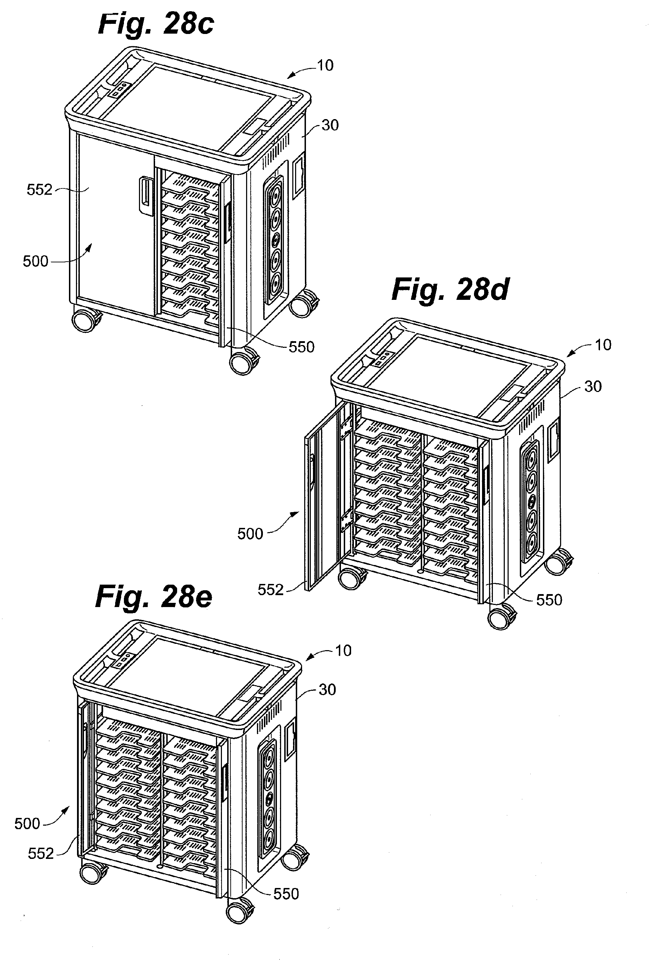

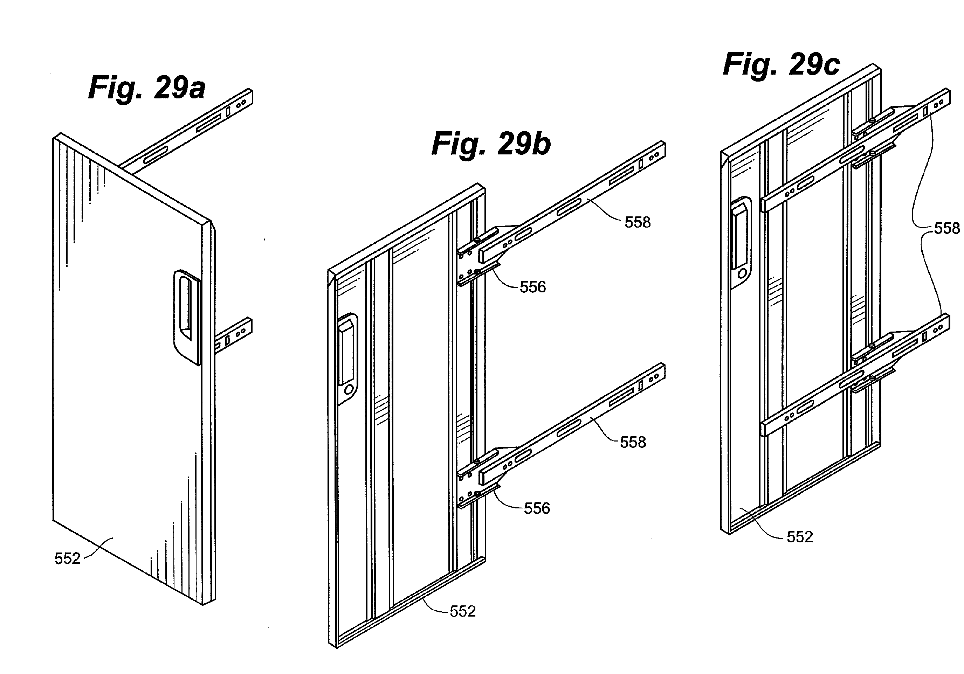

Figures 28A-E further illustrate the operation of a door assembly 500 in accordance with some embodiments of the cart 10. In Figure 28A, the doors 550, 552 are closed. Figure 28B illustrates a door 550 that has been pivoted to an open position to provide access to the interior of the cart. Figure 28C shows the door 550 translated rearward to a stowed position. Figure 28D shows a second door 552 pivoted to an open position, and Figure 28E shows the second door 552 translated rearward to a stowed position. Figures 29A-C further illustrate the actuation of a door from such a door assembly 500. Figure 29A shows the door 552 in the closed position. Figure 29B shows the door 552 in the open position pivoted about pivots 556. Figure 29C shows the door 552 in the stowed position translated rearward on slides 558. Accordingly, embodiments of carts in accordance with the invention include a door assembly 500 that provides easy access to the interior of the cart 10.

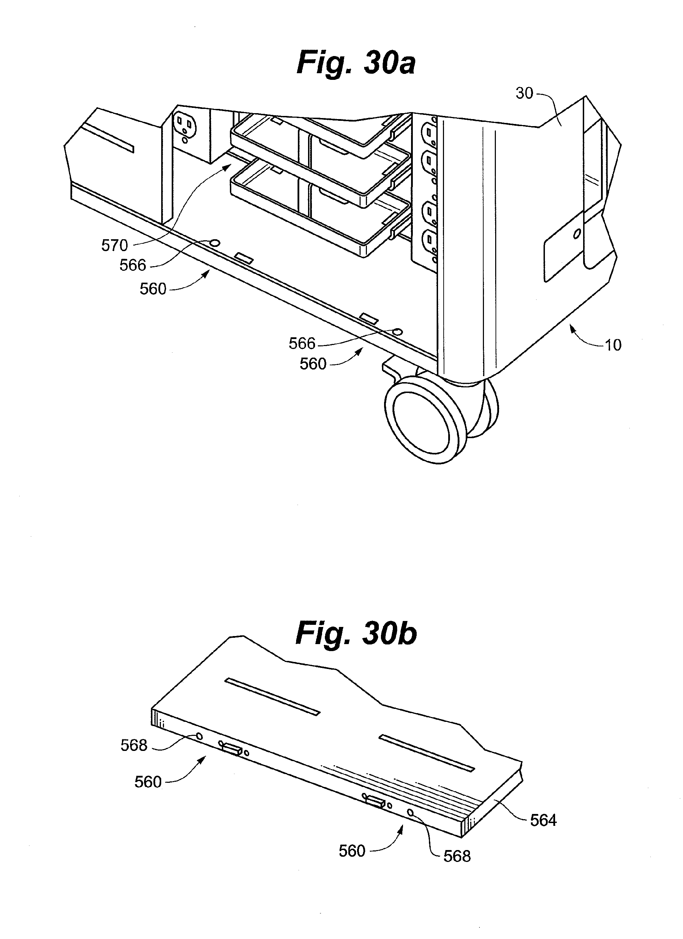

Figures 30A-B illustrates a cart 10 with a grounding system 560 in accordance with an embodiment of the invention. Figure 30A shows a rear perspective of a cart 10 with a rear panel 564 removed. Figure 30B shows a portion of the rear panel 564. As shown, the cabinet 30 of the cart 10 and the rear panel 564 includes mating contact points 566, 568 that contact each other when the panel is attached to the cart. When in contact, the rear panel 564 is connected to an electrical grounding path provided by the cart, which will reduce the likelihood of shock.

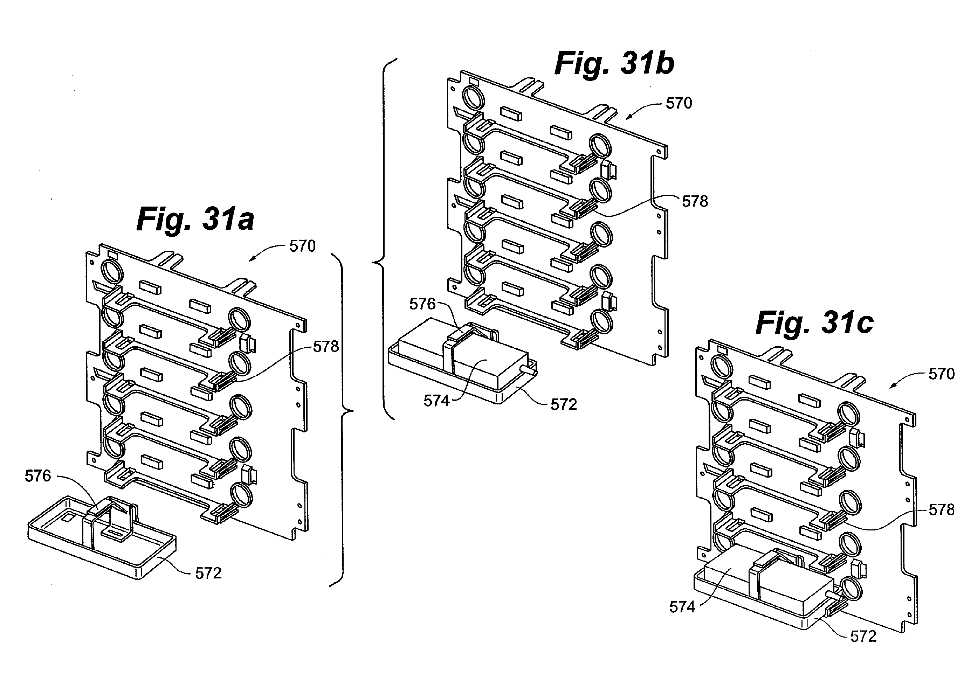

Figures 31A-C illustrate an AC/DC converter retention system 570 in accordance with an embodiment of the invention. The AC/DC converter retention system 570 is shown in a cart 10 in Figures 12, 15, and 30A. As shown, the AC/DC converter retention system includes a series of trays 572 in which individual AC/DC converters 574 for each mobile computing device can be retained (e.g., with hook and loop straps 576), as shown in Figure 31B. The tray 572 can then be inserted to a tray retainer 578 to hold the converter 574, as shown in Figure 31C. Generally, a series of tray retainers will be provided in close vertical proximity to minimize the amount of space used within the interior of the cart to store the converters. Providing a separate tray for each converter and retaining the trays on the retainers after the converters are installed on the trays allows the converters to be more efficiently stored within the cart.

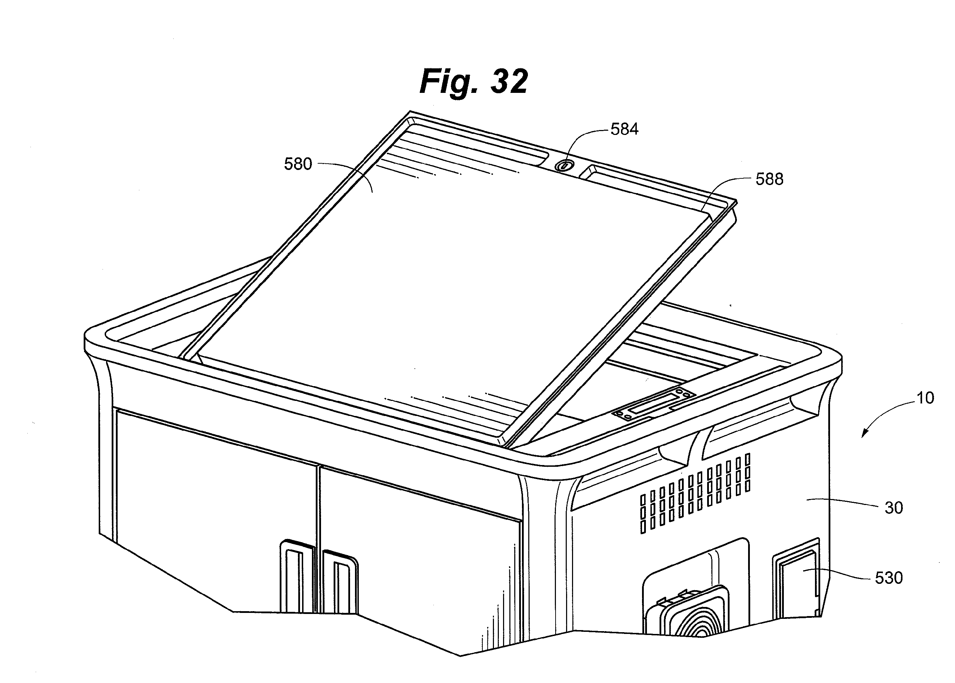

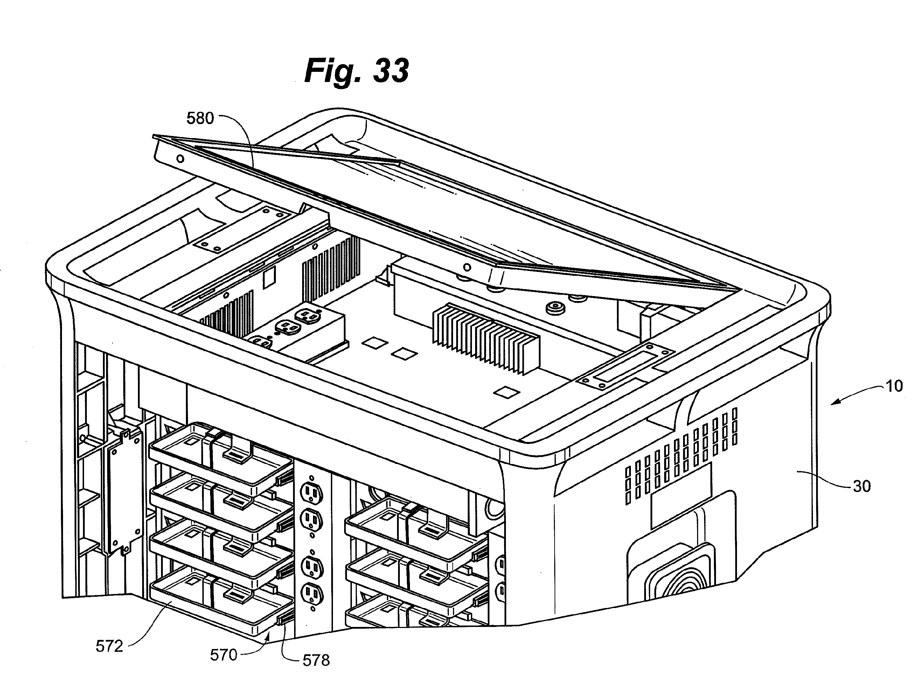

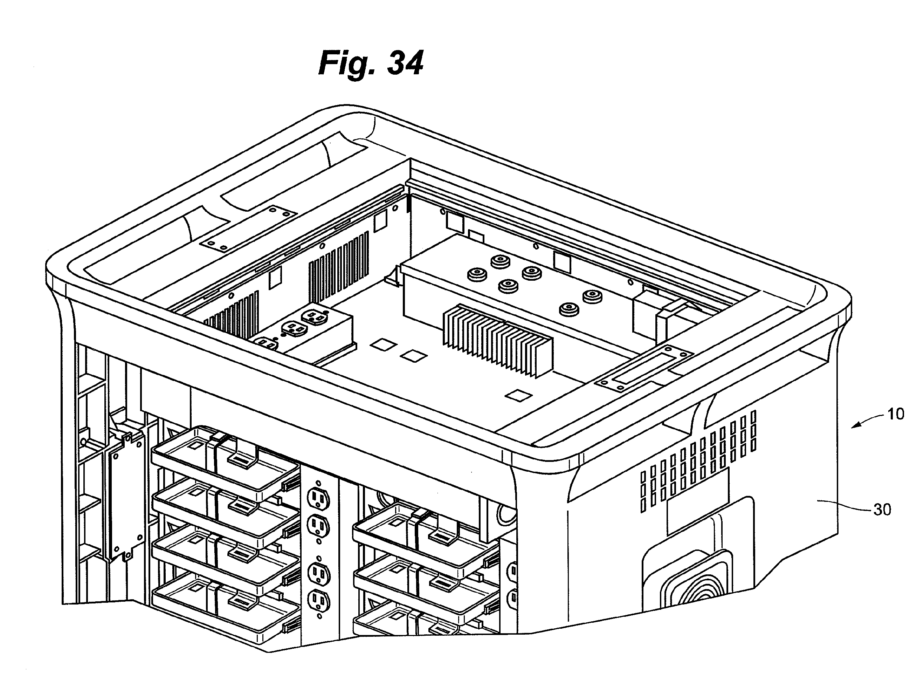

Figures 32-34 illustrate an embodiment of a cart 10 with a top access door 580 (e.g., a door residing in a generally horizontal plane when closed) in accordance with an embodiment of the invention. Figure 32 shows a front perspective view of a cart 10 with such a door 580 in a partially open position. Figure 33 shows a rear perspective view of the cart with the door 580 in a partially open position. Figure 34 shows a rear perspective view of the cart with the door removed illustrating access to various cart components. Such a door is useful to provide access to the interior of the cart. As shown in Figure 32, the door may include a keyed entry 584 to limit access to the interior of the cart. In some embodiments, a key (not shown) is retained in the keyway entry when the keyway is in the unlocked position. In such an embodiment, the key can be used as a handle to lift the door from a closed position to a partially open or fully opened position, which eliminates the need for a separate handle. Also as shown in Figure 32, some embodiments include a spill channel 588 to collect any fluids that may be spilled on the top of the cart.

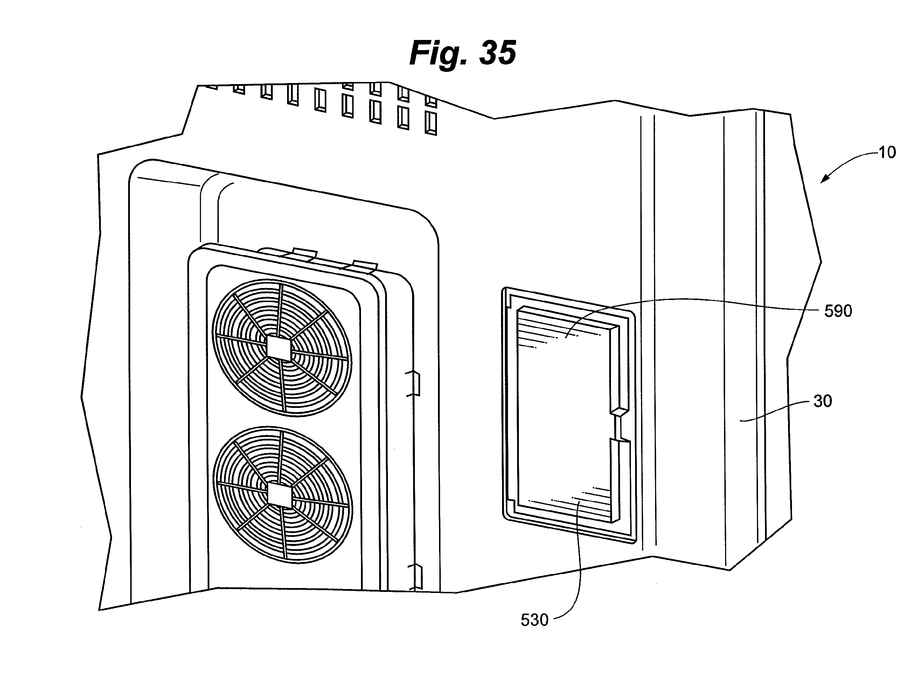

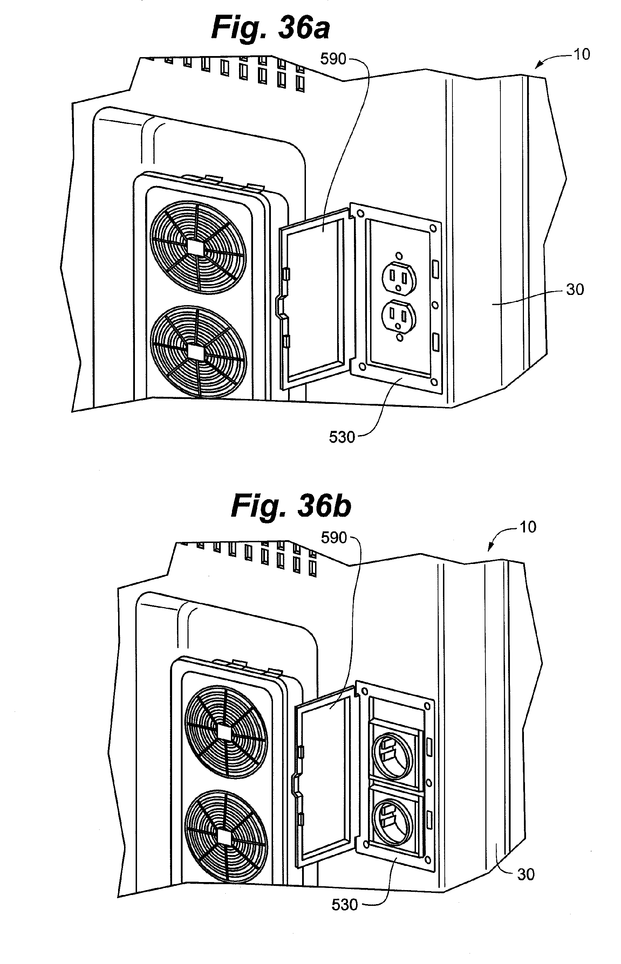

As described above, in some embodiments the cart includes one or more auxiliary power outlets 530 on the exterior of the cart. Figures 35 and 36A-B show an embodiment of the auxiliary power outlet having a cover 590 (e.g., a hinged cover) to reduce the likelihood that foreign objects will be placed in the auxiliary power outlet 530. In Figure 35, the cover 590 is closed to block access to the auxiliary power outlet. In Figure 36A, the cover is open to provide access to a United States style power outlet, while in Figure 36B the cover is open to provide access to a European style power outlet.

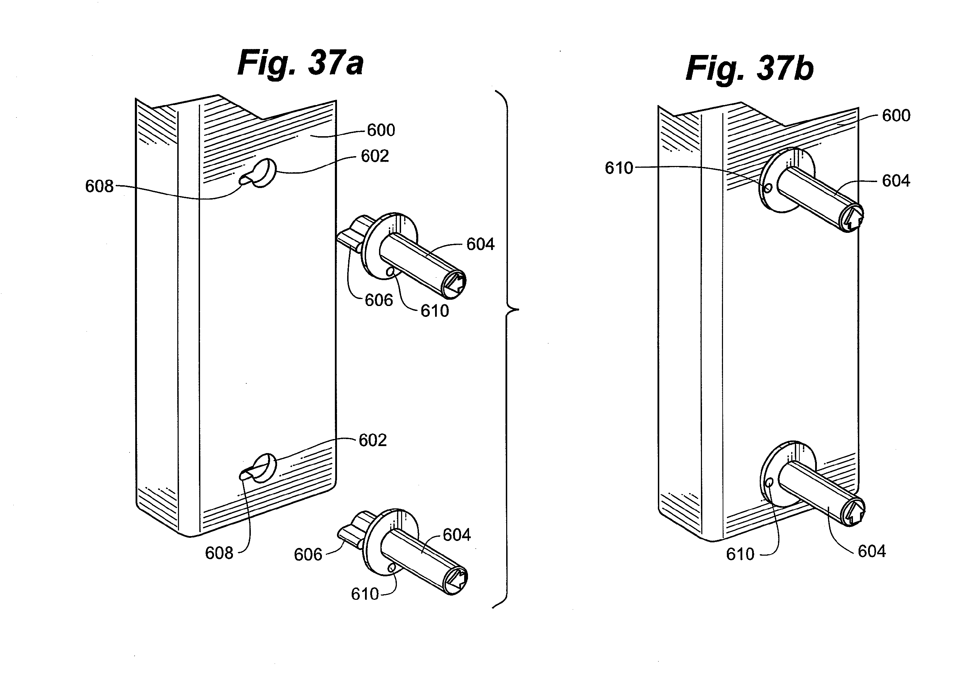

Some embodiments of the cart are adapted to provide a variety of different horizontal shelf configurations. As shown in Figures 37A-B, such embodiments may be provided with vertical risers 600 having a series of vertically spaced apertures 602 to receive shelf retaining pegs 604. In such embodiments, the pegs 604 can be inserted into an aperture 602 located at a desired vertical height. In the embodiment shown in Figure 37A, the pegs 604 are provided with an asymmetrical extension 606 which can be aligned with an asymmetrical extension 608 of the aperture. After insertion, the pegs 604 can be rotated (e.g., 90 degrees to 270 degrees) such that the asymmetrical extension 606 of the peg is no longer aligned with the asymmetrical extension 608 of the aperture to secure the pegs in place. Such an arrangement is shown in Figure 37B, where peg orientation indicator dots 610 are shown rotated 90 degrees with respect to the aligned orientation shown in Figure 37A. A shelf (not shown in Figures 37A-B) can then be placed on the secured pegs.

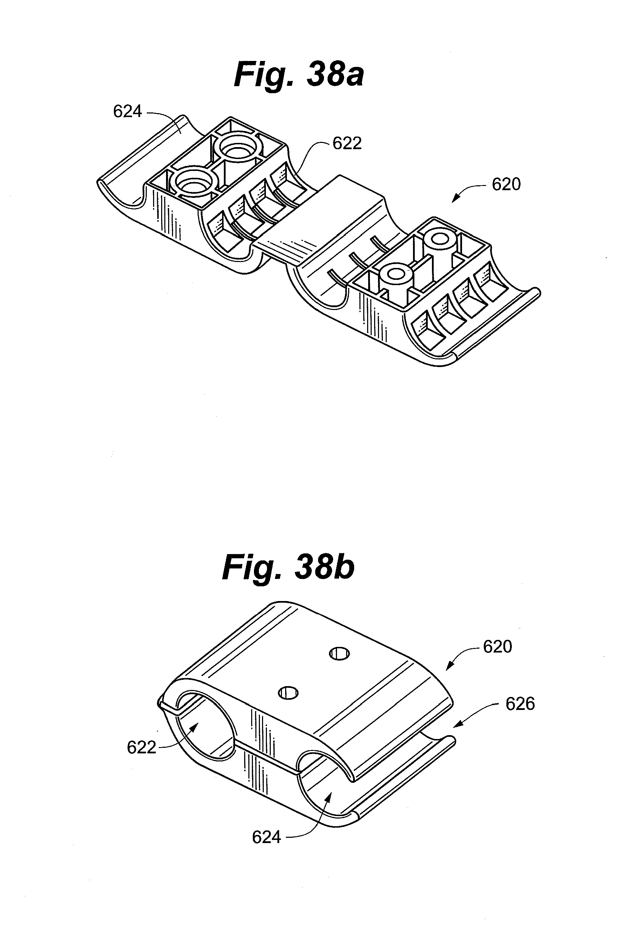

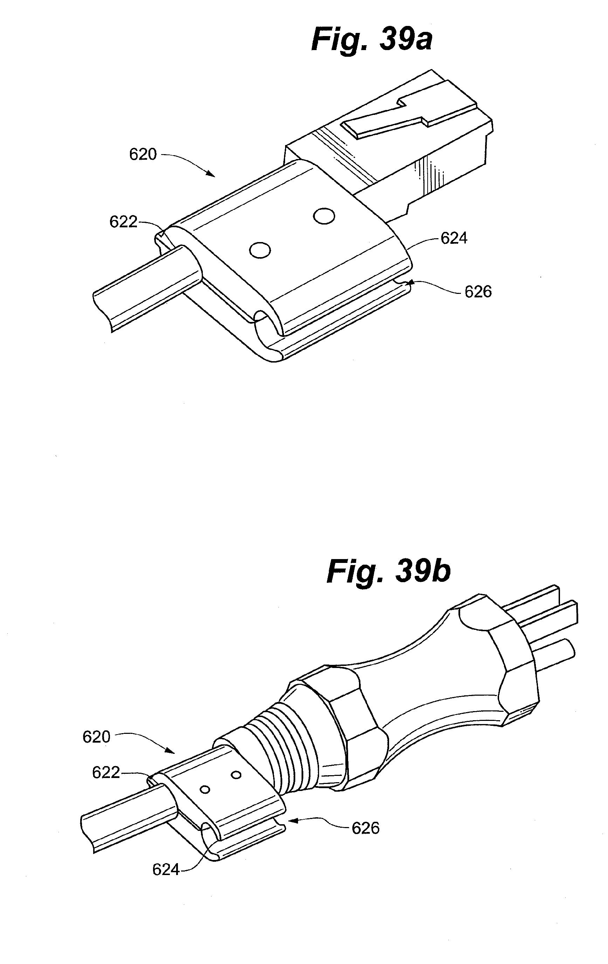

Embodiments of the invention also include a cord retainer 620 to retain power and/or network connecting cords. Figure 38A shows an embodiment of a cord retainer 620 in an open position, and Figure 38B shows an embodiment of the cord retainer 620 in a closed position. As shown, the cord retainer has a first cord retention channel 622 and a second cord retention channel 624. In the open position, a first cord (not shown in Figure 38A) is placed in the first cord retention channel 622. The cord retainer 620 can then be closed about the first cord. As shown in Figure 38B, the second cord retention channel 624 includes an access groove 626 that allows a second cord (or another portion of the first cord) to be inserted into the channel 624 when the cord retainer is in the closed position. Figure 39A shows an embodiment of a network connecting cord 628 (e.g., an Ethernet cable) retained within the first cord retention channel 622, and Figure 39B shows an embodiment of a power cord 630 retained within the first retention channel 622. Such cord retainers 620 may be provided about the cart as desired to facilitate cable management.

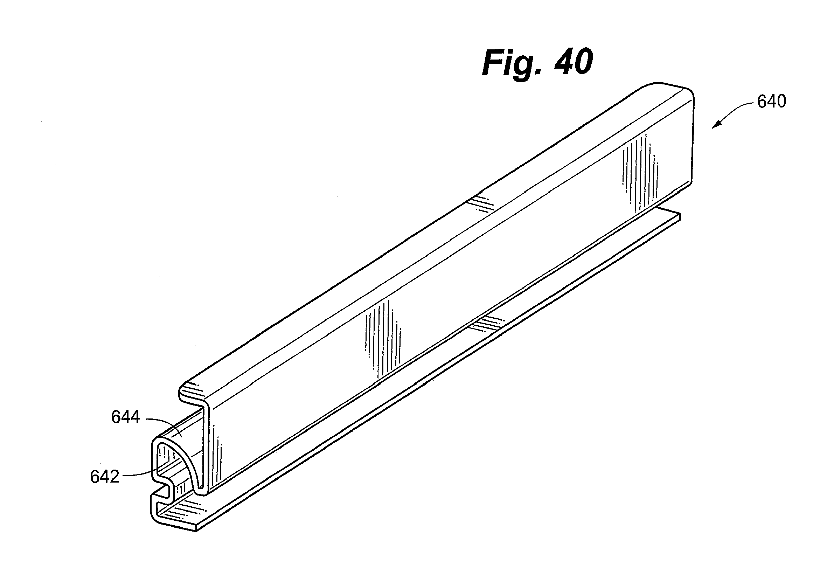

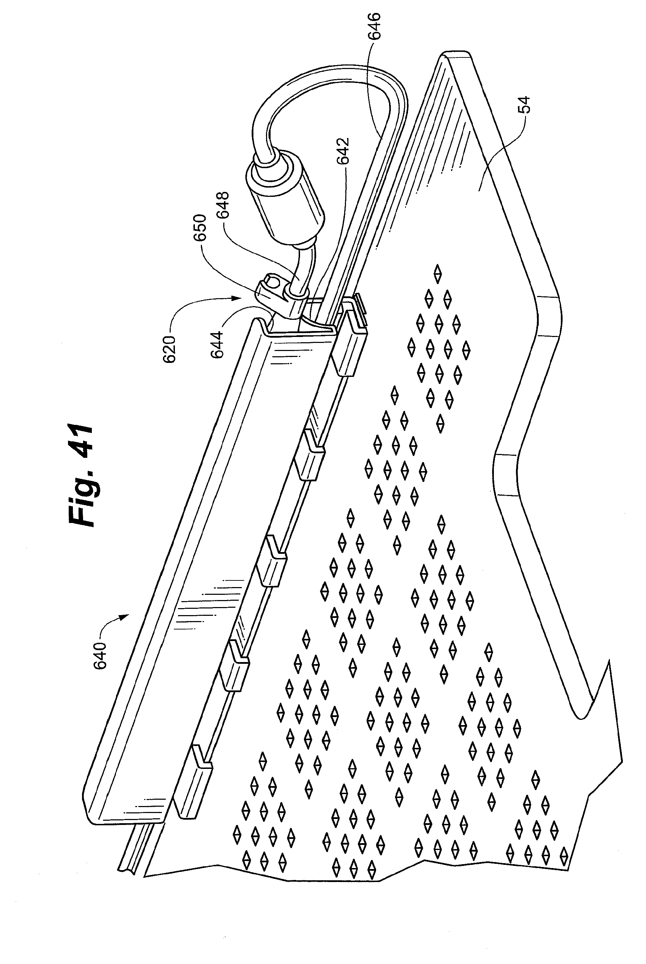

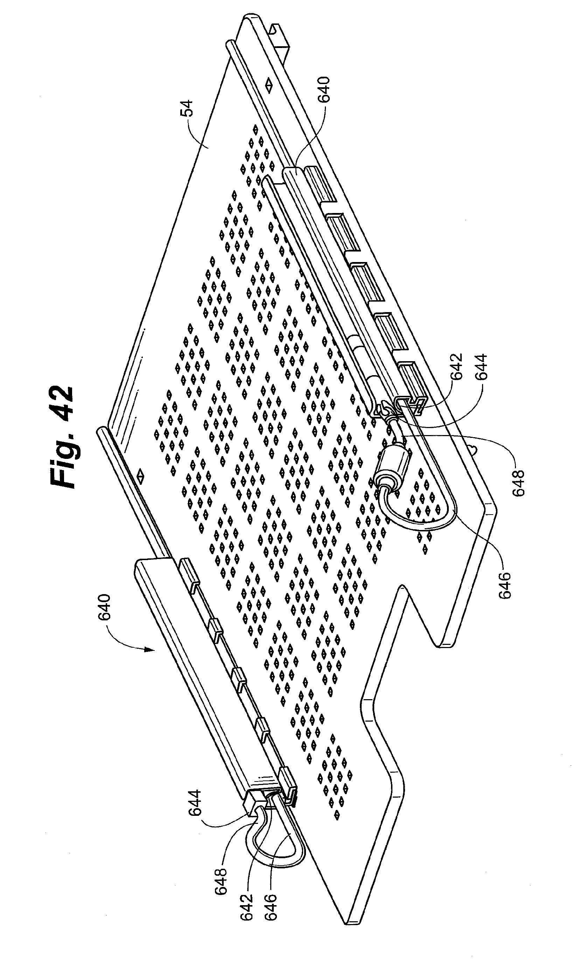

As shown in Figures 40-42, embodiments of the invention also include an elongated cable retention device 640. As shown in Figure 40, the elongated cable retention device 640 can have a first elongated channel 642 and a second elongated channel 644. The first elongated channel 642 may be used to route a cable (e.g. a power cable or a network connecting cable). The second elongated channel 644 is useful for securing a free end of the cable at a desired position. Figure 41 shows an embodiment of the elongated cable retention device 640 secured to a shelf 54 and having a cable 646 in the first elongated channel 642 with a free end 648 positioned in the second elongated channel 644. As shown in Figure 41, a cord retainer 620 can be provided and used with the elongated cable retention device 640. In some embodiments, the cord retainer 620 has a profile 650 that mates with the second elongated channel 644 to facilitate the retention of the free end 648 of the cable 646 within the second elongated channel 644. In certain embodiments, the device 640 comprises a flexible material (e.g., a flexible polymer) which facilitates the retention of the cables within the channels. Figure 42 shows two elongated cable retention devices 640 secured to a shelf 54, each having a cable 646 retained in the first elongated channel with a free end 648 secured in the second elongated channel.

Embodiments of the invention also include a method of docking a mobile computing device into any of the dockings stations, interfaces, and mobile computing device carts discussed herein. In some embodiments, the steps include accessing an interior space of a cabinet, inserting a mobile computing device into a docking station disposed within the interior space of the cabinet, and automatically connecting the mobile computing device to a power supply system while inserting the mobile computing device into the docking station. Some embodiments also include automatically connecting the mobile computing device to a network connection system while inserting the mobile computing device into the docking station. The method steps can be repeated until a mobile computing device is docked in each docking station in the cart (e.g., first, second, third,...fortieth mobile computing devices can be inserted into corresponding first, second, third,...fortieth docking stations).

In other embodiments, the steps include accessing an interior space of a cabinet, inserting a mobile computing device having a mobile computing device-cart interface attached thereto into the interior space of the cabinet, and automatically connecting the mobile computing device to a power supply system via the interface while inserting the mobile computing device into the docking station. Some embodiments also include automatically connecting the mobile computing device to a network connection system via the interface while inserting the mobile computing device into the docking station.

These steps can be repeated with additional mobile computing devices until all the desired mobile computing devices are stored and connected in the cart. In other embodiments, the method includes simultaneously charging at least a portion of the plurality of mobile computing devices within the cart and/or simultaneously updating the software of the plurality of mobile computing devices via the network connections.

Thus, embodiments of the invention are disclosed. Although the present invention has been described in considerable detail with reference to certain disclosed embodiments, the disclosed embodiments are presented for purposes of illustration and not limitation and other embodiments of the invention are possible. One skilled in the art will appreciate that various changes, adaptations, and modifications may be made without departing from the spirit of the invention and the scope of the appended claims.

Embodiments of the invention can be described with reference to the following numbered clauses, with preferred features laid out in the dependent clauses:
1. A mobile computing device cart, comprising:
   a cabinet defining an interior space;
   a power supply system for charging a plurality of mobile computing devices when stored within the interior space; and
   a plurality of mobile computing device docking stations disposed in the interior space, the docking stations connecting the plurality of mobile computing devices to the power supply system when the plurality of mobile computing devices are docked in the plurality of docking stations within the interior space, each docking station having a power connection configured to connect to the mobile computing device automatically as the mobile computing device is positioned in the docking station.
2. The cart of clause 1, wherein each docking station includes a key such that the mobile computing device can only be positioned in the docking station in one direction.
3. The cart of clause 2, wherein the key is a patterned slot corresponding to a profile of the mobile computing device.
4. The cart of clause 1, wherein each docking station has a shape adapted to conform to the mobile computing device to hold the mobile computing device in a desired position and the power connection is a male connector extending from the docking station.
5. The cart of clause 1, wherein the cart includes at least one horizontal shelf within the interior space and at least a portion of the plurality of docking stations are disposed on the shelf.
6. The cart of clause 1, wherein the cart includes at least one horizontal shelf within the interior space and at least a portion of the plurality of docking stations are disposed on the shelf and adapted to hold a corresponding portion of the plurality of mobile computing devices in a generally vertical position.
7. The cart of clause 1, wherein the cabinet further includes a door to close the interior space.
8. The cart of clause 1, further including wheels positioned on an underside of the cabinet.
9. The cart of clause 1, wherein the cart includes at least 10 docking stations.
10. The cart of clause 1, further including an air circulation system to cool the plurality of mobile computing devices when they are in the interior space, the air circulation system including at least one fan disposed in an outer surface of the cabinet.
11. The cart of clause 1, further including a network connection system for connecting the plurality of mobile computing devices to a network when stored within the interior space, the plurality of docking stations connecting the plurality of mobile computing devices to the network connection system when the plurality of mobile computing devices are docked in the plurality of docking stations within the interior space, each docking station having network connection configured to connect to the mobile computing device automatically as the mobile computing device is positioned in the docking station.
12. The cart of clause 11, wherein the network connection includes a male connector disposed within each docking station, the male connector having a beveled leading edge to help guide the male connector into a receiving connector in the mobile computing device.
13. The cart of clause 12, wherein the male connector does not include a locking tab, such that the male connector can be completely connected and disconnected to the receiving connector in the mobile computing device by applying a force only to the mobile computing device.
14. The cart of clause 12, wherein the male connector is mounted to the docking station via a flange having at least one aperture for receiving a connector, wherein the aperture allows for relative movement between the flange and the connector to facilitate alignment between the male connector and the mobile computing device receiving connector.
15. The cart of clause 14, wherein the aperture has a star shape and the connector includes a screw.
16. The cart of clause 12, wherein the male connecter is connected at a right angle to a cable.
17. The cart of clause 1, wherein the power connection includes a male power connector disposed within each docking station, the male power connector having a beveled leading edge to help guide the male power connector into a receiving power connector in the mobile computing device.
18. The cart of clause 17, wherein the male power connector is mounted to the docking station via a flange having at least one aperture for receiving a connector, wherein the aperture allows for relative movement between the flange and the connector to facilitate alignment between the male power connector and the mobile computing device power receiving connector.
19. The cart of clause 17, wherein the male power connecter is connected at a right angle to a cable.
20. The cart of clause 1, wherein the mobile computing device is a laptop computer.
21. A mobile computing device cart, comprising:
   a cabinet defining an interior space;
   a power supply system for charging a plurality of mobile computing devices when stored within the interior space; and
   a portable interface between each mobile computing device and the cart, the interface attached to the mobile computing device and having a first surface in apposition to the mobile computing device and a second surface in apposition to the cart when the mobile computing device is disposed in the cart, the first surface having at least a male power connector aligned with a mobile computing device power receiving connector, the second surface having a mobile computing device cart power connector for creating a power connection to the mobile computing device cart automatically as the mobile computing device and interface are positioned in the interior space.
22. The cart of clause 21, further comprising a network connection system for connecting the plurality of mobile computing devices to a network when stored within the interior space, the first surface also having at least a male network connector matching a mobile computing device network receiving connector, the second surface having a mobile computing device cart network connector for creating a network connection to the mobile computing device cart automatically as the mobile computing device and interface are positioned in the interior space.
23. The cart of clause 22, wherein the mobile computing device power receiving connector and mobile computing device network receiving connector are positionable on the first surface to accommodate a variety of mobile computing device configurations.
24. The cart of clause 22, wherein the interface includes flexible connectors that allow the male power connector and the male network connector to be routed to the mobile computing device power receiving connector and mobile computing device network receiving connector regardless of their orientation on the mobile computing device.
25. The cart of clause 22, wherein the interface extends to the underside of the mobile computing device and the male power connector and the male network connector are included in a port for connecting to the underside of the mobile computing device.
26. The cart of clause 22, wherein the network connection on the cart side includes a cart male connector disposed within the cart, the cart male connector having a beveled leading edge to help guide the male connector into a receiving connector in the interface.
27. The cart of clause 26, wherein the cart male connector does not include a locking tab, such that the male connector can be completely connected and disconnected to the receiving connector in the interface by applying a force only to the mobile computing device.
28. The cart of clause 27, wherein the cart male connector is mounted to the cart via a flange having at least one aperture for receiving a connector, wherein the aperture allows for relative movement between the flange and the connector to facilitate alignment between the cart male connector and the interface receiving connector.
29. The cart of clause 21, wherein the power connection includes a cart male power connector disposed within the cart, the cart male power connector having a beveled leading edge to help guide the male power connector into a receiving power connector in the interface.
30. The cart of clause 29, wherein the male power connector is mounted to the cart via a flange having at least one aperture for receiving a connector, wherein the aperture allows for relative movement between the flange and the connector to facilitate alignment between the cart male power connector and the interface power receiving connector.
31. A mobile computing device-cart portable interface, comprising a first surface adapted to be in apposition to a mobile computing device and a second surface adapted to be in apposition to a cart when the mobile computing device is positioned in the cart, the first surface having at least a male power connector aligned with the mobile computing device power receiving connector, the second surface having a mobile computing device cart power connector for creating a power connection to the mobile computing device cart automatically as the mobile computing device and interface are positioned in the cart.
32. The interface of clause 31, wherein the first surface also includes at least a male network connector matching a mobile computing device network receiving connector, the second surface having a mobile computing device cart network connector for creating a network connection to the mobile computing device cart automatically as the mobile computing device and interface are positioned in the cart.
33. A method of docking a mobile computing device into a mobile computing device cart, comprising:
   accessing an interior space of a cabinet;
   inserting a first mobile computing device into a first docking station disposed within the interior space of the cabinet;
   automatically connecting the first mobile computing device to a power supply system while inserting the first mobile computing device into the first docking station;
   automatically connecting the first mobile computing device to a network connection system while inserting the first mobile computing device into the first docking station;
   inserting a second mobile computing device into a second docking station disposed within the interior space of the cabinet;
   automatically connecting the second mobile computing device to a power supply system while inserting the second mobile computing device into the second docking station; and
   automatically connecting the second mobile computing device to a network connection system while inserting the second mobile computing device into the second docking station.
34. A mobile computing device cart, comprising:
   a cabinet defining an interior space;
   a network connection system for connecting a plurality of mobile computing devices to a network when stored within the interior space; and
   a plurality of mobile computing device docking stations disposed in the interior space, the plurality of docking stations connecting the plurality of mobile computing devices to the network connection system when the plurality of mobile computing devices are docked in the plurality of docking stations within the interior space, each docking station having a network connection that connects to the mobile computing device automatically as the mobile computing device is positioned in the docking station.
35. The cart of clause 34, further comprising a power supply system for charging the plurality of mobile computing devices, the plurality of docking stations connecting the plurality of mobile computing devices to the power supply system when the plurality of mobile computing devices are docked in the plurality of docking stations within the interior space, each docking station having a power connection that connects to the mobile computing device automatically as the mobile computing device is positioned in the docking station.
36. A mobile computing device docking station module, the docking station module providing a plurality of docking stations for connecting a plurality of mobile computing devices to a power supply system when the plurality of mobile computing devices are docked in the docking module, each docking station having a power connection that connects to the corresponding mobile computing device automatically as the mobile computing device is positioned in the docking station.

## Claims

1. A mobile computing device cart, comprising:
a cabinet defining an interior space;
a power supply system for charging a plurality of mobile computing devices when stored within the interior space; and
a portable interface between each mobile computing device and the cart, the interface attached to the mobile computing device and having a first surface in apposition to the mobile computing device and a second surface in apposition to the cart when the mobile computing device is disposed in the cart, the first surface having at least a male power connector aligned with a mobile computing device power receiving connector, the second surface having a mobile computing device cart power connector for creating a power connection to the mobile computing device cart automatically as the mobile computing device and interface are positioned in the interior space.

2. The cart of claim 1, further comprising a network connection system for connecting the plurality of mobile computing devices to a network when stored within the interior space, the first surface also having at least a male network connector matching a mobile computing device network receiving connector, the second surface having a mobile computing device cart network connector for creating a network connection to the mobile computing device cart automatically as the mobile computing device and interface are positioned in the interior space.

3. The cart of claim 2, wherein the mobile computing device power receiving connector and mobile computing device network receiving connector are positionable on the first surface to accommodate a variety of mobile computing device configurations.

4. The cart of claim 2, wherein the interface includes flexible connectors that allow the male power connector and the male network connector to be routed to the mobile computing device power receiving connector and mobile computing device network receiving connector regardless of their orientation on the mobile computing device.

5. The cart of claim 2, wherein the interface extends to the underside of the mobile computing device and the male power connector and the male network connector are included in a port for connecting to the underside of the mobile computing device.

6. The cart of claim 2, wherein the network connection on the cart side includes a cart male connector disposed within the cart, the cart male connector having a beveled leading edge to help guide the male connector into a receiving connector in the interface.

7. The cart of claim 6, wherein the cart male connector does not include a locking tab, such that the male connector can be completely connected and disconnected to the receiving connector in the interface by applying a force only to the mobile computing device.

8. The cart of claim 7, wherein the cart male connector is mounted to the cart via a flange having at least one aperture for receiving a connector, wherein the aperture allows for relative movement between the flange and the connector to facilitate alignment between the cart male connector and the interface receiving connector.

9. The cart of claim 1, wherein the power connection includes a cart male power connector disposed within the cart, the cart male power connector having a beveled leading edge to help guide the male power connector into a receiving power connector in the interface.

10. The cart of claim 9, wherein the male power connector is mounted to the cart via a flange having at least one aperture for receiving a connector, wherein the aperture allows for relative movement between the flange and the connector to facilitate alignment between the cart male power connector and the interface power receiving connector.

11. A mobile computing device-cart portable interface, comprising a first surface adapted to be in apposition to a mobile computing device and a second surface adapted to be in apposition to a cart when the mobile computing device is positioned in the cart, the first surface having at least a male power connector aligned with the mobile computing device power receiving connector, the second surface having a mobile computing device cart power connector for creating a power connection to the mobile computing device cart automatically as the mobile computing device and interface are positioned in the cart.

12. The interface of claim 11, wherein the first surface also includes at least a male network connector matching a mobile computing device network receiving connector, the second surface having a mobile computing device cart network connector for creating a network connection to the mobile computing device cart automatically as the mobile computing device and interface are positioned in the cart.
